# EUROPEAN PATENT APPLICATION

(11) **EP 1 045 538 A1**
(43) Date of publication of application: **18.10.2000**
(21) Application number: 99943432.7
(22) Date of filing: 21.09.1999
(51) Int. Cl.: H04J 1/00

(54) **MULTICARRIER COMMUNICATION DEVICE AND MULTICARRIER COMMUNICATION METHOD**

(30) Priority: 21.09.1998 JP 26600598; 30.10.1998 JP 30982798
(71) Applicant: MITSUBISHI DENKI KABUSHIKI KAISHA, Tokyo 100-8310 (JP)
(72) Inventor: MATSUMOTO, Wataru, Mitsubishi Denki K.K., Tokyo 100-8310 (JP); KATO, Masataka, Mitsubishi Denki K.K., Tokyo 100-8310 (JP); KOIZUMI, Yoshiaki, Mitsubishi Denki K.K., Tokyo 100-8310 (JP); HIGUMA, Toshiyasu, Mitsubishi Denki K.K., Tokyo 100-8310 (JP); INOUE, Masahiro, Mitsubishi Denki K.K., Tokyo 100-8310 (JP)
(74) Representative: Pfenning, Meinig & Partner
(86) International application number: JP9905129
(87) International publication number: WO0018048

(57) **Abstract**

In order to provide a multi-carrier communication system which is quite suitable for the network in the small-scale enterprise, the home, etc., and has a low cost and a high transmission rate, and is secure against noises, in the present invention, an QAM encoder 12 outputs multi-carrier data of a DMT modulation/demodulation system, then LPFs 12a to 12d cut off the frequency band of respective carriers into 1/4, then an inverse Fourier transform circuit 13 performs the inverse Fourier transform, and a P/S 14 performs the serial conversion. An up-sampling circuit 14a up-samples the serial-converted multi-carrier data by the quadruple to convert into the multi-carrier data whose frequency interval between the carriers is 4×. f and whose frequency band is W, and then the multi-carrier data are sent out to a power line 30 via a D/A converter 15, a transmitting AMP 16, an LPF 17, and a power line coupling circuit 18.

## Description

### Technical Field

The present invention relates to a multi-carrier communication system and a multi-carrier communication method that execute data communication based on a multi-carrier modulation/demodulation system.

### Background Art

In recent years, with the spread of the Internet, the personal computer, the so-called home informational equipments having a data communicating function, etc., the spread of the home network which can connect mutually them in the small-scale enterprise, the home, etc. to implement the communication and control between them is requested.

However, in the event that a large quantity of data such as the sound, the moving picture, etc. must be communicated in real time by the single carrier in such home network, processing performance of the communication system must be increased, e.g., a transmission rate of the communication modem, etc. in the communication system must be increased considerably. Therefore, there is such a problem that a cost of the communication system is increased.

In addition, it has not been so advanced to build the data communication line for exclusive use of the home network in the already-constructed house because its building cost adds up. For this reason, much attention is now focused on the power line communication in which, while utilizing the existing power line in place of providing newly the data communication line so as to reduce the cost and utilize effectively the existing equipment, the communication can be carried out via the power line modem to control the devices, etc. connected via the power line, or the like. However, the power line communication is such a method that the communication is carried out by using the power line which supplies the power to various electric appliances in the building, the home, the factory, etc. Therefore, the noises caused by a variety of electric appliances connected to the power line must be taken into account and thus the measure for these noises is indispensable. For this purpose, in the invention concerning the signal frequency selecting system set forth in Patent Application Publication (KOKAI) Sho 62-107538, first the trial communication is performed while sweeping or switching automatically the signal frequency in the communication, then the frequency which has the minimum influence of noises is selected to achieve the best communication, and then the communication is carried out by using such frequency as the signal frequency. In this case, it may be guessed that basically the above signal frequency selecting system is premised on the communication conducted by the single carrier in the prior art. As a result, there has been such a problem that the above method is not suitable for a large quantity of data communication in recent years.

Therefore, it is an object of the present invention to provide a multi-carrier communication system and a multi-carrier communication method, which is quite suitable for the network in the small-scale enterprise, the home, etc., and has a low cost and a high transmission rate, and is secure against the noises.

### Disclosure of the Invention

In order to achieve the above object, in the present invention, a multi-carrier communication system comprises a multi-carrier encoding means for encoding input data into multi-carrier data, in which a frequency interval between respective carriers is a reference frequency, by modulating the input data according to a multi-carrier modulation system; a cutting-off means for cutting off bandwidths of respective carriers in the multi-carrier data of a multi-carrier modulation/demodulation system supplied from the multi-carrier encoding means into one over a predetermined multiple; an inverse Fourier transforming means for inversely Fourier-transforming the multi-carrier data from the cutting-off means; an up-sampling means for up-sampling the multi- carrier data from the inverse Fourier transforming means by the predetermined multiple to output the multi-carrier data in which an inter-carrier frequency is set to the predetermined multiple of the reference frequency and bandwidths of respective carriers are set equally to bandwidths of respective carriers of the multi-carrier data which are encoded by the multi-carrier encoding means; and a transmitting means for transmitting the multi-carrier data supplied from the up-sampling means.

Also, in another invention, a multi-carrier communication system comprises a receiving means for receiving multi-carrier data whose frequency interval between respective carriers is set to a predetermined multiple of a reference frequency; a down-sampling means for down-sampling the multi-carrier data received by the receiving means to output the multi-carrier data in which an inter-carrier frequency is set to the reference frequency and each carrier bandwidth is set to one over the predetermined multiple of the carrier bandwidth of the multi-carrier data received by the receiving means; a Fourier transforming means for Fourier-transforming the multi-carrier data from the down-sampling means; and a decoding means for decoding the multi-carrier data from the Fourier transforming means.

Also, in another invention, a multi-carrier communication system comprises a multi-carrier encoding means for encoding input data into multi-carrier data, in which a frequency interval between carriers is a reference frequency, by modulating the input data according to a multi-carrier modulation system; a cutting-off means for cutting off bandwidths of respective carriers in the multi-carrier data of a multi-carrier modulation/demodulation system supplied from the multi-carrier encoding means into one over a predetermined multiple; an inverse Fourier transforming means for inversely Fourier-transforming the multi-carrier data from the cutting-off means; an up-sampling means for up-sampling the multi-carrier data from the inverse Fourier transforming means by the predetermined multiple to output the multi-carrier data in which an inter-carrier frequency is set to the predetermined multiple of the reference frequency and bandwidths of respective carriers are set equally to bandwidths of respective carriers of the multi-carrier data which are encoded by the multi-carrier encoding means; a transmitting means for transmitting the multi-carrier data supplied from the up-sampling means; a receiving means for receiving the multi-carrier data whose frequency interval between respective carriers is set to the predetermined multiple of the reference frequency; a down-sampling means for down-sampling the multi-carrier data received by the receiving means to output the multi-carrier data in which an inter-carrier frequency is set to the reference frequency and each carrier bandwidth is set to one over the predetermined multiple of the carrier bandwidth of the multi-carrier data received by the receiving means; a Fourier transforming means for Fourier-transforming the multi-carrier data from the down-sampling means; and a decoding means for decoding the multi-carrier data from the Fourier transforming means.

Particularly, the multi-carrier encoding means outputs the multi-carrier data in which same data are encoded on respective carriers.

Also, the multi-carrier encoding means outputs the multi-carrier data in which a channel of the data to be encoded on respective carriers is changed every time when the data are encoded on respective carriers.

Also, in another invention, a multi-carrier communication system comprises a multi-carrier encoding means for encoding input data only on one carrier of multi-carriers by modulating the input data according to a multi-carrier modulation system; an inverse Fourier transforming means for inversely Fourier-transforming the multi-carrier data from the multi-carrier encoding means; a cutting-off means for cutting off the multi-carrier data output from the inverse Fourier transforming means by a predetermined frequency; and a transmitting means for transmitting the cut-off multi-carrier data.

Also, in another invention, a multi-carrier communication system comprises a receiving means for receiving multi-carrier data in which same data are encoded on respective carriers constituting multi-carriers; and a multi-carrier decoding means for decoding the same data encoded on respective carriers, based on the multi-carrier data received by the receiving means.

Particularly, the multi-carrier decoding means includes an S/N measuring means for measuring S/N of respective carriers constituting the multi-carrier data received by the receiving means, a carrier selecting means for selecting carrier data having a largest S/N from the multi-carrier data received by the receiving means based on measured outputs of the S/N measuring means, a frequency-base data converting means for converting the carrier data selected by the carrier selecting means into frequency-base data, and a decoding means for decoding the frequency-base data from the frequency-base data converting means.

Also, the multi-carrier decoding means includes a Fourier transforming means for Fourier-transforming the multi-carrier data received by the receiving means, an S/N measuring means for measuring S/N of respective carriers constituting the multi-carrier data from the Fourier transforming means, a carrier selecting means for selecting carrier data having a largest S/N from the multi-carrier data from the Fourier transforming means based on measured outputs of the S/N measuring means, and a decoding means for decoding the carrier data selected by the carrier selecting means.

Also, the multi-carrier decoding means includes a carrier cutting-out means for cutting out the multi-carrier data received by the receiving means every carrier, an adjusting means for converting data which is cut out every carrier by the carrier cutting-out means into a same frequency and performing phase adjustment of the data, an adding means for adding outputs from the adjusting means every carrier, a frequency-base data converting means for converting added data from the adding means into frequency-base data, and a decoding means for decoding the frequency-base data from the frequency-base data converting means.

Also, the multi-carrier decoding means further includes an S/N measuring means for measuring S/N of data cut out every carrier by the carrier cutting-out means, and a gain setting means for setting gain of the data from the carrier cutting-out means every carrier based on measured outputs of the S/N measuring means, wherein the adjusting means converts the data cut out every carrier by the carrier cutting-out means into a same frequency, adjusts phase of the data, and performs gain adjustment based on the gain set by the gain setting means.

Also, the multi-carrier decoding means includes a Fourier transforming means for Fourier-transforming the multi-carrier data received by the receiving means, an adjusting means for adjusting phase of the multi-carrier data being Fourier-transformed by the Fourier transforming means every carrier, an adding means for adding outputs from the adjusting means every carrier, and a decoding means for decoding added data from the adding means.

Also, the multi-carrier decoding means further includes an S/N measuring means for measuring S/N of respective carriers constituting the multi-carrier data being Fourier-transformed by the Fourier transforming means every carrier, and a gain setting means for setting gain of the multi-carrier data from the Fourier transforming means every carrier based on measured outputs of the S/N measuring means, wherein the adjusting means adjusts phase of the Fourier-transformed multi-carrier data every carrier, and performs gain adjustment based on the gain set by the gain setting means.

Also, the multi-carrier decoding means includes a Fourier transforming means for Fourier-transforming the multi-carrier data received by the receiving means, a decoding means for decoding the multi-carrier data being Fourier-transformed by the Fourier transforming means every carrier, and a deciding means for receiving decoded data decoded by the decoding means every carrier, and deciding and outputting the decoded data which are most often received.

Also, the transmitting means transmits the multi- carrier data via a power line.

Also, the receiving means receives the multi-carrier data via a power line.

### Brief Description of the Drawings

FIG. 1 is a view showing an overall configuration of a power line communication system as an embodiment 1 of a multi-carrier communication system according to the present invention;
FIGS. 2(a) to 2(e) are views showing a frequency spectrum of the multi-carrier data on a frequency base at respective time points in the power line communication system according to the embodiment 1 shown in FIG.1 respectively;
FIGS. 3(a) to 3(c) are views showing a data encoding sequence for respective carriers in compliance with PN sequence according to an embodiment 2 respectively;
FIG. 4 is a view showing an overall configuration of an embodiment 3 of a multi-carrier communication system according to the present invention;
FIGS. 5(a) to 5(d) are views showing a frequency spectrum of multi-carrier data on a frequency base at respective time points in a power line communication system according to the embodiment 3 shown in FIG. 4 respectively;
FIG. 6 is a view showing a partial configuration of an embodiment 4 of a multi-carrier communication system according to the present invention;
FIGS. 7(a) to 7(f) are views showing a frequency spectrum of multi-carrier data on a frequency base at respective time points in a power line communication system according to the embodiment 6 shown in FIG. 4 respectively;
FIG. 8 is a view showing a partial configuration of an embodiment 5 of a multi-carrier communication system according to the present invention;
FIGS. 9(a) to 9(f) are views showing a frequency spectrum of multi-carrier data on a frequency base at respective time points in a power line communication system according to the embodiment 5 shown in FIG. 8 respectively;
FIG. 10 is a view showing a partial configuration of an embodiment 6 of a multi-carrier communication system according to the present invention;
FIGS. 11(a) to 11(h) are views showing a frequency spectrum of multi-carrier data on a frequency base at respective time points in a power line communication system according to the embodiment 6 shown in FIG. 10 respectively;
FIG. 12 is a view showing a partial configuration of an embodiment 7 of a multi-carrier communication system according to the present invention;
FIGS. 13(a) to 13(g) are views showing a frequency spectrum of multi-carrier data on a frequency base at respective time points in a power line communication system according to the embodiment 7 shown in FIG. 12 respectively;
FIG. 14 is a view showing a partial configuration of an embodiment 8 of a multi-carrier communication system according to the present invention; and
FIGS. 15(a) to 15(f) are views showing a frequency spectrum of multi-carrier data on a frequency base at respective time points in a power line communication system according to the embodiment 8 shown in FIG. 14 respectively.

### Best Modes for Carrying Out the Invention

### (1) Embodiment 1

A power line communication system such as a power line modem for communicating via the power line will be explained as embodiments 1 to 8 of a multi-carrier communication system according to the present invention hereinafter. However, this should not be interpreted, of course, such that the multi-carrier communication system of the present invention is limited to the power line communication system. That is, the application of the present invention to the power line communication system shows merely an example, and the present invention may be applied to the multi-carrier communication systems which employ the wire or radio multi-carrier modulation/demodulation system via the communication line such as the normal dedicated communication line, other than the power line communication system. Also, in embodiments 1 to 8 described in the following, explanation will be made while taking the DMT (Discrete MultiTone) modulation system as an example as the multi-carrier modulation system. However, the present invention should not be limited to this DMT modulation/demodulation system, and the OFDM (Orthogonal Frequency Division Multiplex) modulation/demodulation system, etc. may be employed in the present invention. In short, any modulation/demodulation system may be employed if it is the multi-carrier modulation/demodulation system.

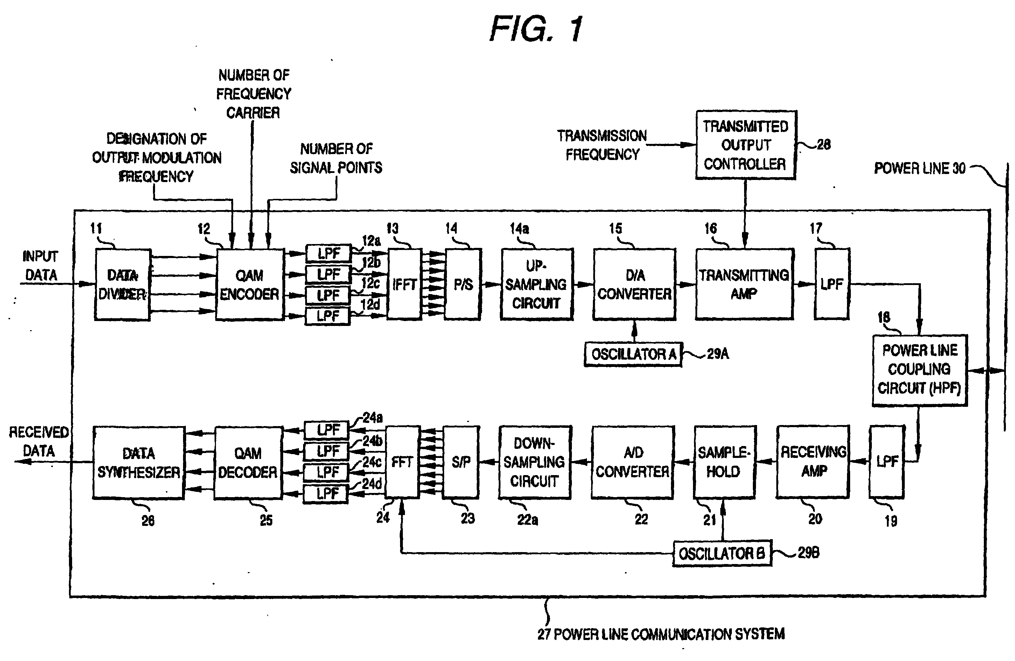

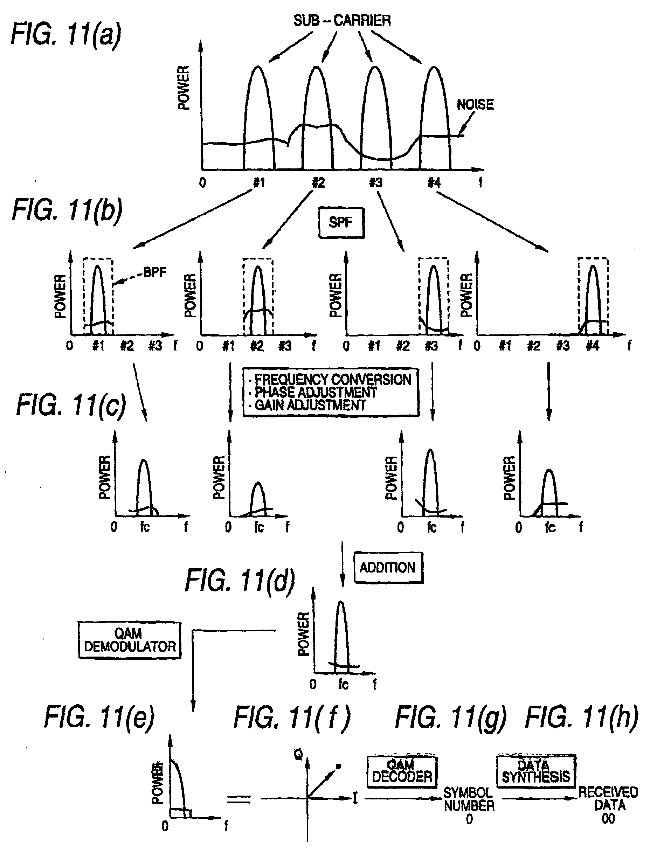

FIG. 1 is a view showing an overall configuration of a power line communication system as an embodiment 1 of a multi-carrier communication system according to the present invention, which is a power line modem having both a transmitting system and a receiving system. A configuration of the receiving system side will be explained. In FIG. 1, 11 denotes a data divider; 12, a QAM encoder having four carrier (tone) outputs as a multi-carrier encoding means; 12a to 12d, low-pass filters (LPFs) as a cutting-off means; 13, a four-input/eight-output inverse Fourier transform circuit (IFFT); 14, a parallel-serial converting circuit (P/S); 14a, an up-sampling circuit; 15, a D/A converter; 16, a transmitting AMP; 17, a low-pass filter (LPF); and 18, a power line coupling circuit. These constitute the transmitting system of the power line communication system 27. In this case, the configuration of the transmitter side of the multi-carrier communication system, although not shown, can be constructed by the primary modulating portion, the multi-carrier modulating portion, etc. In such case, in the configuration of the embodiment 1 shown in FIG. 1, the QAM encoder 12 corresponds to the primary modulating portion, and the low-pass filters (LPFs) 12a to 12d, the inverse Fourier transform circuit (IFFT) 13, the parallel-serial converting circuit (P/S) 14 and the up-sampling circuit 14a correspond to the multi-carrier modulating portion.

Next, a configuration of the transmitting system side will be explained. In FIG. 1, 19 denotes an LPF; 20, a receiving AMP; 21, a sample-hold circuit; 22, an A/D converter; 22a, a down-sampling circuit; 23, a serial-parallel converting circuit (S/P); 24, an eight-input/four-output Fourier transform circuit (FFT); 24a to 24d, low-pass filters (LPFs); 25, a QAM decoder; and 26, a data synthesizer. These constitute the receiving system of the power line communication system 27. Like the configuration of the transmitter side, the configuration of the receiver side of the multi-carrier communication system, although not shown, can be constructed by the primary demodulating portion, the multi-carrier demodulating portion, etc. In such case, in the configuration of the embodiment 1 shown in FIG. 1, the QAM decoder 25 corresponds to the primary demodulating portion, and the low-pass filters (LPFs) 24a to 24d, the Fourier transform circuit (FFT) 24, the serial-parallel converting circuit (S/P) 23 and the down-sampling circuit 22a correspond to the multi-carrier demodulating portion.

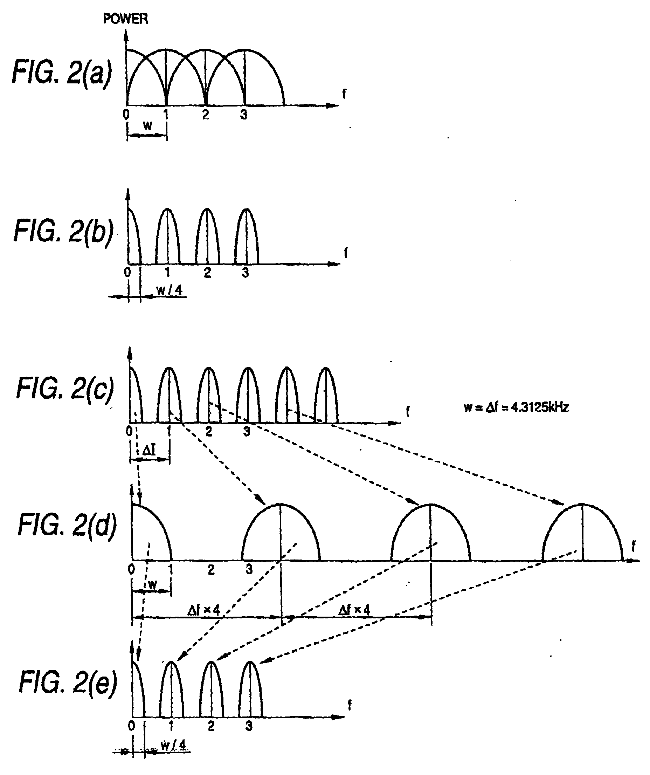

FIGS. 2(a) to 2(e) are views showing a frequency spectrum of the multi-carrier data on a frequency base at respective time points in the power line communication system according to the embodiment 1 shown in FIG. 1 respectively. More particularly, FIG. 2(a) shows a frequency spectrum of multi-carrier data output from the QAM encoder 12, FIG. 2(b) shows a frequency spectrum of multi-carrier data output from the low-pass filters 12a to 12d, FIG. 2(c) shows a frequency spectrum of multi-carrier data output from the parallel-serial converting circuit (P/S) 14, FIG. 2(d) shows a frequency spectrum of multi-carrier data output from the up-sampling circuit 14a, and FIG. 2(e) shows a frequency spectrum of multi-carrier data output from the down-sampling circuit 22a.

Next, an operation will be explained. First of all, an operation of the transmitting system side of the power line communication system 27 according to the embodiment 1 will be explained.

First, when the data are input into this power line communication system 27, the data divider 11 divides input data into a plurality of bit strings. Then, the QAM encoder 12 QAM-codes the data divided by the data divider 11 to encode into the multi-carrier data of the DMT (Discrete MultiTone) modulation/demodulation system, which consist of four carriers (tones) whose frequency band W and frequency interval . f are a reference frequency (4.3125 KHz), as shown in FIG. 2(a), and then outputs it.

In the embodiment 1, based on the output modulation frequency, the number of the frequency carriers (assume that this number is set to four in the embodiment 1), and the number of signal points, which are set previously, the QAM encoder 12 encodes the input data divided by the data divider 11 into four carriers of the multi-carrier respectively. However, as described later, since the frequency bands in excess of W/4 are cut off in respective carriers by the low-pass filters 12a to 12d, the QAM encoder 12 encodes the carrier of less than W/4 only in respective carriers into the data.

Then, the multi-carrier data of the DMT modulation/demodulation system, in which the frequency band W and the frequency interval. f output from the QAM encoder 12, as shown in FIG. 2(a), are DMT-modulated/demodulated into the reference frequency (4.3125 KHz), are input into the low-pass filters (LPFs) 12a to 12d as a cutting-off means. As shown in FIG.2 (b), the low-pass filters (LPFs) 12a to 12d formulate the multi-carrier data whose frequency band is W/4 by cutting off the frequency band of the carriers into one by predetermined multiple (for example, 1/4 in the embodiment 1), and then output it to the inverse Fourier transform circuit 13.

Then, the inverse Fourier transform circuit 13 transforms the multi-carrier data of the DMT modulation/demodulation system from the frequency-base data to the time-base data via the inverse Fourier transformation, and then outputs it to the parallel-serial converting circuit (P/S) 14. As shown in FIG. 2(c), the parallel-serial converting circuit (P/S) 14 serial-converts the parallel multi-carrier data output from the inverse Fourier transform circuit 13, and then output it to the up-sampling circuit 14a.

The up-sampling circuit 14a up-samples the serial multi-carrier data convened as shown in FIG. 2(c) by the quadruple as the above predetermined multiple to convert into the multi-carrier data whose frequency interval is 4×. f=4×4.3125 KHz and the frequency band is returned to the reference frequency of 4×W/4=W=4.3125 KHz, as shown in FIG. 2(d).

Then, the D/A convener 15 analog-converts the up-sampled serial multi-carrier data as shown in FIG. 2(d), based on a signal from an oscillator A 29A. Then, the transmitting AMP 16 amplifies the analog-converted serial multi-carrier data, based on the transmitting frequency designated by a transmitted output controller 28, and outputs it to the low-pass filter (LPF) 17.

The low-pass filter (LPF) 17 cuts off the analog serial multi-carrier data which are up-sampled as shown in FIG. 2(d) at a predetermined cut-off frequency, and then outputs only the multi-carrier data which consist of four carriers below the predetermined cut-off frequency to the power line coupling circuit 18. Then, the power line coupling circuit 18 sends out the analog serial multi-carrier data only consisting of four carriers onto a power line 30.

As a result, onto the power line 30 are output the multi-carrier data which consist of four carriers only shown in FIG.2(d), i.e., the multi-carrier data in which the carrier frequency interval is 4×. f=4×4.3125 KHz, four carrier frequency bands are 4×W/4=W=4.3125 KHz, and the frequency band of the overall multi-carrier data is 4×4×. f=16×4.3125 KHz which is wider four times the output of the inverse Fourier transform circuit 13.

In other words, in the case of the embodiment 1, the frequency spectrum on the power line 30 is substantially identical to the frequency spectrum of the multi-carrier data consisting of four carriers which are obtained by receiving 16 carriers from a 16-output QAM encoder by a 16-input/32-output inverse Fourier transform circuit, then formulating 16 carriers, and then thinning three carriers every four carriers.

Therefore, according to the transmitting system of the power line communication system 27 of the embodiment 1, since the frequency band of the overall multi-carrier data output onto the power line 30 is expanded four times the output of the inverse Fourier transform circuit 13, as shown in FIG. 2(d), the data transmission which is secure against the power line noises by such expansion of the frequency band can be achieved even if the noises from the power line 30 are concentrated upon the certain frequency band.

Also, in the transmitting system of the power line communication system 27 according to the embodiment 1, even if the frequency band of the overall multi-carrier data to be communicated over the power line 30 is decided to 4×4×. f=16 ×4.3125 KHz, for example, in order to reduce the influence of the power line noises, the 4-carrier output QAM encoder 12 and the 4-input/8-output inverse Fourier transform circuit 13 can be utilized only by adding the low-pass filters (LPFs) 12a to 12d and the up-sampling circuit 14a based on the transmitting system of the power line communication system 27 according to the embodiment 1. Therefore, the number of inputs/outputs of the QAM encoder and the inverse Fourier transform circuit can be reduced rather than the case where the multi-carrier data consisting of tour carriers which are obtained by receiving 16 carriers from the 16-output QAM encoder by the 16-input/32-output inverse Fourier transform circuit, then formulating 16 carriers, and then thinning three carriers every four carriers are generated, and as a result the cost can be reduced considerably by using the inexpensive QAM encoder and the inexpensive inverse Fourier transform circuit.

According to the transmitting system of the power line communication system 27 of the embodiment 1, even when the data must be transmitted to a high speed power line communication system which receives the multi-carrier data whose frequency band W and frequency interval . f are the reference frequency (4.3125 KHz), such high speed power line communication system can receive the multi-carrier data supplied from the low speed power line communication system of the embodiment 1 if it is previously arranged between both power line communication systems on which multi-carrier the low speed power line communication system 27 of the embodiment 1 encodes the data, and thus the data communication with the high speed power line communication system can be achieved without improvement.

Next, an operation of the receiving system side of the power line communication system 27 of the embodiment 1 will be explained.

When the multi-carrier data, in which the frequency interval is 4×. f=4×4.3125 KHz, four carrier frequency bands are 4×W/4=W=4.3125 KHz, and the frequency band of the overall multi-carrier data is 4×4×. f=16×4.3125 KHz which is four times the output of the inverse Fourier transform circuit 13, as shown in FIG. 2(d), are transmitted over the power line 30 while designating the address, the node number, etc. of other power line communication system 27 as the communication destination, the receiving system of the power line communication system 27 as the communication destination performs an opposite operation to that in the above transmitting system side.

More particularly, the power line coupling circuit (HPF) 18 receives the multi-carrier data consisting of four carriers which have the frequency interval and the frequency band, as shown in FIG. 2(d), from the power line 30. Then, the low-pass filter (LPF) 19 removes the noises from the serial multi-carrier data received via the power line coupling circuit 18. Then, the receiving AMP 20 converts the data into a voltage level that belongs to the control range of the A/D converter 22 and then outputs it to the sample-hold circuit 21.

The sample-hold circuit 21 holds the serial multi-carrier data, whose voltage level has been converted, for a convert time of the A/D convener based on a signal from an oscillator 29B and then outputs the data to the A/D convener 22. Then, the A/D convener 22 analog/digital- converts the serial multi-carrier data and then outputs them to the down-sampling circuit 22a.

The down-sampling circuit 22a executes a down-sampling process which is an opposite process to the up-sampling process of the up-sampling circuit 14a, and then converts the multi-carrier data having the frequency spectrum, as shown in FIG. 2(d), into the multi-carrier data, in which the carrier frequency interval is 1/4×4×. f=4.3125 KHz, four carrier frequency bands are 1/4×4×W/4=W/4= 4.3125/4 KHz, and the frequency band of the overall multi-carrier data is 1/4×4×4×. f=4×4.3125 KHz, as shown in FIG. 2(e).

That is, the multi-carrier data having the frequency spectrum, as shown in FIG. 2(d), are convened into the multi-carrier data having the frequency spectrum, as shown in FIG. 2(e), by the down-sampling process of the down-sampling circuit 22a. In this case, since the frequency spectrum of the multi-carrier data shown in FIG. 2(e) is identical to the frequency spectrum of the multi-carrier data shown in FIG. 2(c), the multi-carrier data are returned to a state obtained after they are output from the parallel-serial convening circuit (P/S) 14 but before they are input into the up-sampling circuit 14a. However, the multi-carrier data obtained after the down-sampling process shown in FIG. 2(e) consist of four carriers by the LPF 17 on the transmitter side, but the multi-carrier data obtained before the up-sampling process shown in FIG. 2(c) consist of more than four carriers which have the same frequency interval and the same frequency band because the data are prior to the cutting-off by the LPF 17.

Then, the serial-parallel convening circuit (S/P) 23 converts the serial multi-carrier data output from the down-sampling circuit 22a, as shown in FIG. 2(e), into the parallel data and then outputs them to the Fourier transform circuit (FFT) 24. Then, the Fourier transform circuit (FFT) 24 Fourier-transforms the parallel multi-carrier data.

In other words, according to the Fourier transforming process of the Fourier transform circuit 24, the multi-carrier data having the frequency spectrum shown in FIG. 2(e) are returned to a state obtained after they are output from the low-pass filters (LPFs) 12a to 12d but before they are input into the inverse Fourier transform circuit (IFFT) 13.

Then, the multi-carrier data that have been subjected to the Fourier transforming process by the Fourier transform circuit 24 are fed to the low-pass filters (LPFs) 24a to 24d. Then, the low-pass filters (LPFs) 24a to 24d remove the noises from respective carriers of the multi-carrier data and then output the multi-carrier data to the QAM decoder 25. Then, the QAM decoder 25 QAM decodes the data in each carrier of the multi-carrier data from which the noises have been removed, i.e., the data in each frequency band.

Finally, the data synthesizer 26 synthesizes the QAM-decoded data, whereby the received data can be obtained.

Therefore, according to the receiving system of the power line communication system 27 of the embodiment 1, like the case of the transmitting system, since the multi-carrier data whose frequency band of the overall multi-carrier data output onto the power line 30 are expanded four times the output of the inverse Fourier transform circuit 13, as shown in FIG. 2(d), are received and processed, the data reception which is secure against the power line noises by such expansion of the frequency band can be achieved with the inexpensive configuration even if the noises from the power line 30 are concentrated upon the certain frequency band.

Also, according to the receiving system of the power line communication system 27 according to the embodiment 1, even if the frequency band of the overall multi-carrier data communicated over the power line 30 is decided to 4×4×. f=16×4.3125 KHz, for example, in order to reduce the influence of the power line noises, the 4-carrier output QAM decoder 25 and the 8-input/4-output Fourier transform circuit 24 can be utilized only by adding the down-sampling circuit 22a based on the receiving system of the power line communication system 27 according to the embodiment 1. Therefore, the number of inputs/outputs of the QAM decoder and the Fourier transform circuit can be reduced rather than the case where the 32-input/16-output Fourier transform circuit and the 16-input QAM decoder are employed, and as a result the cost can be considerably reduced by using the inexpensive QAM decoder and the inexpensive Fourier transform circuit.

According to the transmitting system of the power line communication system 27 of the embodiment 1, even when the data communication with the higher speed power line communication system rather than the embodiment 1, which communicates the multi-carrier data whose carrier frequency band W is the same as the embodiment 1 and whose frequency interval . f is a measure, for example, 4.3125 KHz of the frequency interval (4×4.3125 KHz) of the multi-carrier data transmitted onto the power line 30 of the embodiment 1, must be carried out, such data communication can be implemented between the power line communication system 27 of the embodiment 1 and the high speed power line communication system if it is arranged in advance between both power line communication systems that the data should be loaded only on the carrier constituting the multi-carrier of the power line communication system 27 of the embodiment 1 on the low speed side, and thus the data communication with the high speed power line communication system can be achieved without improvement. Similarly, even when the data communication with the lower speed power line communication system rather than the embodiment 1, which Communicates the multi-carrier data whose carrier frequency band W is the same as the embodiment 1 and whose frequency interval . f is a multiple of the frequency interval (4×4.3125 KHz) of the multi-carrier data transmitted onto the power line 30 of the embodiment 1, must be carried out, such data communication can be implemented between the power line communication system 27 of the embodiment 1 and the low speed power line communication system if it is also arranged in advance between both power line communication systems that the data should be loaded only on the carrier constituting the multi-carrier of the power line communication system on the low speed side.

In the power line communication system of the embodiment 1, the QAM encoder 12 encodes respective data that have been divided by the data divider 11 into respective carriers (tones), i.e., encodes different data on respective carriers. In this embodiment 1, the QAM encoder 12 encodes the data that have been divided by the data divider 11 into respective carriers (tones), i.e., encodes the same data on respective carriers.

In such case, a data transmission rate is lowered to 1/4 of the embodiment 1, etc. Nevertheless, since the same data are encoded on four carriers each having the different frequency, other carriers can be employed when a certain carrier is lost by the noises. As a result, the noise resistance against the power line noises can be improved four times the embodiment 1, etc. and thus the data communication can be accomplished with higher reliability.

Also, for descriptive convenience, in the power line communication system of the embodiment 1, explanation is made while taking as an example the power line modem which has both the transmitting system and the receiving system to enable the power line transmission and reception. However, it is of course that either a system including only the transmitting system of the embodiment 1 to enable only the transmission of the power line communication of the embodiment 1 or a system including only the receiving system of the embodiment 1 to enable only the reception of the power line communication of the embodiment 1 may be constructed and that either a system including the transmitting system of the embodiment 1 and the receiving system of the normal power line communication without the down-sampling circuit 22a or a system including the receiving system of the embodiment 1 and the power line transmitting system of the normal power line communication without the low-pass filters 12a to 12d and the up-sampling circuit 14a may be constructed.

Also, in the explanation of the above embodiment 1, simply the inverse Fourier transform on the transmitting side and the Fourier transform on the receiving side are carried out by the inverse Fourier transform circuit (IFFT) 13 and the Fourier transform circuit (FFT) 24 respectively. The inverse Fourier transforming means and the Fourier transforming means or the inverse Fourier transform and the Fourier transform, which are mentioned in the present invention, can function satisfactorily if they can obtain transformed results equivalent to the inverse Fourier transform on the transmitting side or the Fourier transform on the receiving side, i.e., transformed results from the frequency-base signal to the time-base signal or vice versa. For example, the modulation or the demodulation equivalent to the inverse Fourier transform or the Fourier transform may be executed by providing a QAM modulator and a QAM demodulator in place of the inverse Fourier transform circuit (IFFT) 13 and the Fourier transform circuit (FFT) 24. In addition, it is of course that the inverse Fourier transforming means and the Fourier transforming means or the inverse Fourier transform and the Fourier transform may be constructed such that the results of the inverse Fourier transform and the Fourier transform are calculated previously to store in a memory as a table and then such results of the inverse Fourier transform and the Fourier transform are read from the memory based on a look-up table system and then output when the data are input.

### (2) Embodiment 2

A power line communication system according to an embodiment 2 has such a feature that, when the QAM encoder 12 encodes respective data divided by the data divider 11 on respective carriers (tones), such data are encoded by using the PN (Pseudorandom Noise) sequence which is employed in the spread spectrum, etc.

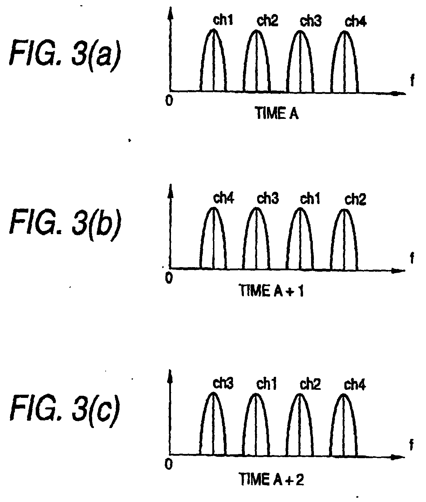

FIGS. 3(a) to 3(c) are views showing data encoding sequence for respective carriers in compliance with the PN sequence according to the embodiment 2 respectively. FIG. 3(a) shows the data encoding sequence in compliance with the PN sequence at a time A, i.e., respective channels CH1 to CH4 data divided by the data divider 11 are encoded on respective four multi-carriers from the low frequency to the high frequency in the order of channels CH1 to CH4, FIG. 3(b) shows the case where respective channels CH1 to CH4 data divided by the data divider 11 are encoded on respective four multi-carriers from the low frequency to the high frequency in the order of channels CH4, CH3, CH1, CH2 in compliance with the PN sequence a time A+1, and FIG. 3(c) shows the case where respective channels CH1 to CH4 data divided by the data divider 11 are encoded on respective four multi-carriers from the low frequency to the high frequency in the order of channels CH3, CH1, CH2, CH4 in compliance with the PN sequence a time A+2.

Hence, according to the power line communication system according to the embodiment 2, respective channels CH1 to CH4 data divided by the data divider 11 are encoded on respective four multi-carriers from the low frequency to the high frequency in accordance with the PN sequence, and the data are encoded on the carriers in different channels at respective times. Therefore, even when such a situation is brought about that a certain carrier is lost continuously by the noises, the data on the particular channel are never continuously lost if the data can transmitted and received via other carriers. Also, in the case that different data are encoded on respective carriers, the noise resistance against the power line noises can be improved and the data communication can be achieved with high reliability.

In addition, according to the power line communication system according to the embodiment 2, like the case of the power line communication system according to the embodiment 1, even when the data communication with the higher or lower speed power line communication system rather than the embodiment 1, which communicates the multi-carrier data whose carrier frequency band W is the same as the embodiment 1 and whose frequency interval . f is a measure or multiple of the frequency interval (4×4.3125 KHz) of the multi-carrier data transmitted over the power line 30 of the embodiment 1, must be carried out, the power line communication system according to the embodiment 2 can transmit/receive the multi-carrier data to/from the higher or lower speed power line communication system in compliance with the PN sequence without improvement, etc. if it is arranged in advance between both power line communication systems that the data should be encoded and decoded to load only on the carrier constituting the multi-carrier of the power line communication system on the low speed side and which PN sequence should be employed to encode or decode the data on respective carriers.

### (3) Embodiment 3

Next, an embodiment 3 of a multi-carrier communication system according to the present invention will be explained with reference to the drawings.

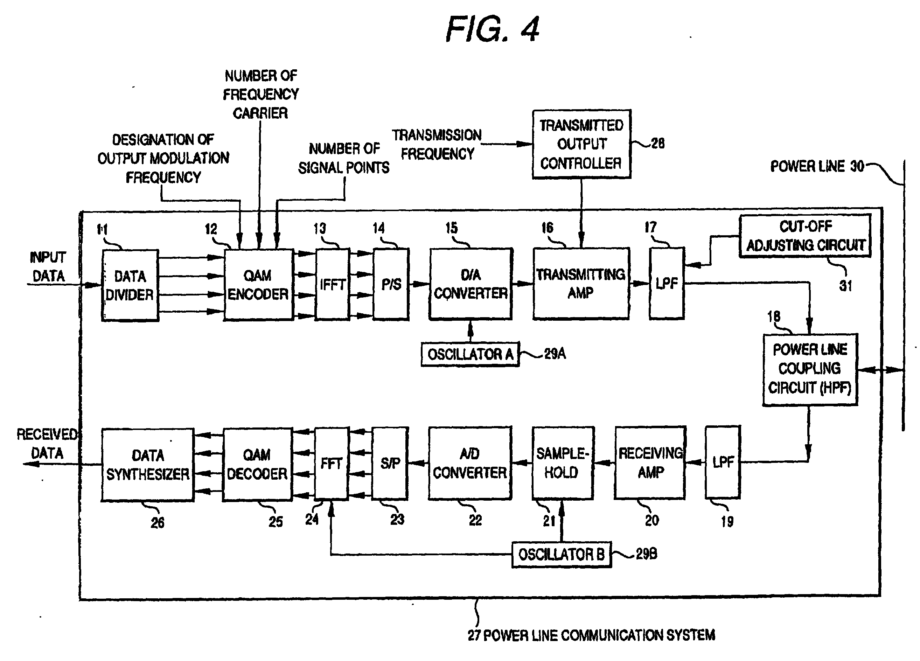

FIG. 4 is a view showing an overall configuration of the embodiment 3 of the multi-carrier communication system according to the present invention, which is a power line modem having both a transmitting system and a receiving system according to the present invention. In FIG. 4, 31 denotes a cut-off adjusting circuit which adjusts a cut-off frequency, phase, and gain of the LPF 17. Since remaining configuration are identical to constituent elements of the embodiment 1 shown in FIG.1, their explanation will be omitted by labeling the same numerals to them.

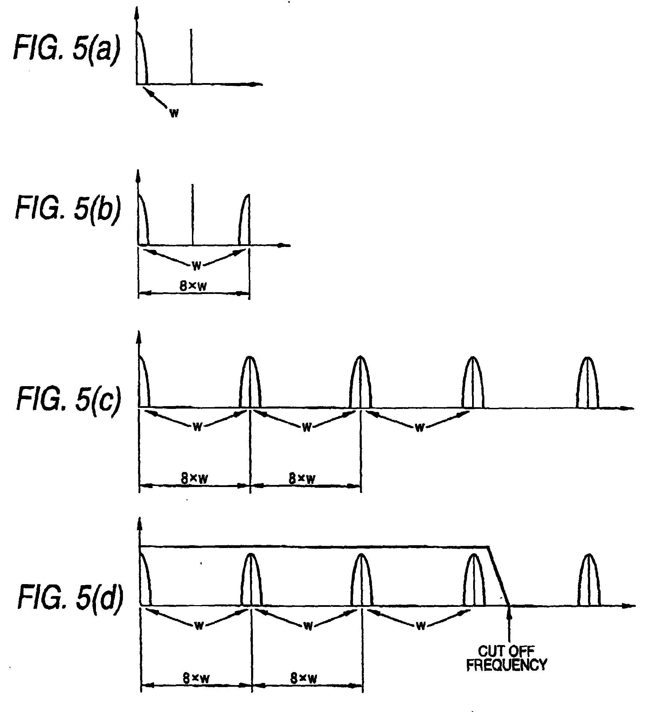

FIGS. 5(a) to 5(d) are views showing a frequency spectrum of multi-carrier data on the frequency base at respective time pants in a power line communication system according to the embodiment 3 shown in FIG. 4 respectively. More particularly, FIG. 5(a) shows a frequency spectrum of multi-carrier data output from the QAM encoder 12, FIG. 5(b) shows a frequency spectrum of multi-carrier data to which the data obtained by calculating the conjugate complex of the multi- carrier data serving as an inverse Fourier transform object in the inverse Fourier transform circuit (IFFT) 13 and shown in FIG. 5(a) and then inverting it is added, FIG. 5(c) shows a frequency spectrum of multi-carrier data output from the parallel-serial converting circuit (P/S) 14, FIG. 5(d) shows a frequency spectrum of multi-carrier data output from the up-sampling circuit 14a, and FIG. 5(e) shows a frequency spectrum of multi-carrier data output from the low-pass filter (LPF) 17.

Next, an operation will be explained.

First, when the data are input into this power line communication system 27 of the embodiment 3, the data divider 11 divides input data into a plurality of bit strings. Then, the QAM encoder 12 QAM-codes the data being divided by the data divider 11 to encode only on one carrier of the multi-carrier data of the DMT (Discrete MultiTone) modulation/demodulation system, which consist of tour carriers (tones) in the frequency band W (4.3125 KHz), for example, only on the first carrier of the carrier number 0, as shown in FIG. 5(a), and output them, but does not output other carriers of the carrier numbers 1 to 3.

Then, the multi-carrier data of the DMT modulation/demodulation system, which are output from the QAM encoder 12, whose frequency interval . f is 4.3125 KHz and whose frequency band W is 4.3125 KHz, and in which the data are encoded on the first carrier of the carrier number 0, are input into to the inverse Fourier transform circuit 13. Then, the inverse Fourier transform circuit 13 generates 8×W multi-carrier data by calculating the conjugate complex of the multi-carrier data to invert and folding the multi-carrier data shown in FIG. 5(a) to invert as shown in FIG. 5(b), transforms resultant data from the frequency-base data to the time-base data via the inverse Fourier transform, and then outputs the data to the parallel-serial converting circuit (P/S) 14.

The parallel-serial converting circuit (P/S) 14 serial-converts the parallel multi-carrier data output from the inverse Fourier transform circuit 13, as shown in FIG. 5(c), and then output it to the D/A converter 15.

Then, the D/A converter 15 analog-converts the serial multi-carrier data, as shown in FIG. 5(c). Then, the transmitting AMP 16 amplifies the analog-converted serial multi-carrier data, and outputs the data to the low-pass filter (LPF) 17.

The low-pass filter (LPF) 17 cuts off the serial multi-carrier data which exceed a cut-off frequency being adjusted by the cut-off adjusting circuit 31, as shown in FIG. 5(c), and then outputs the serial multi-carrier data which consist of four carriers below the cut-off frequency, as shown in FIG. 5(d), to the power line coupling circuit 18. Then, the power line coupling circuit 18 sends out the serial multi-carrier data onto a power line 30.

As a result, onto the power line 30 are output the multi-carrier data, in which the same data is encoded on respective four carriers below the cut-off frequency, as shown in FIG. 5(d), and the frequency interval of four carriers is 8×W (. f)=8×4.3125 KHz, and the frequency band W of four carriers is 4.3125 KHz.

Hence, according to the transmitting system of the power line communication system of the embodiment 3, even if the noises from the power line 30 are concentrated upon the certain frequency band, the data transmission which is secure against the power line noises correspondingly since the same data are encoded on respective four carriers, each carrier frequency interval of which is 8×W (. f)=8×4.3125 KHz, as shown in FIG. 5(d).

Next, an operation of the receiving system side of the power line communication system of the embodiment 3 will be explained.

When the multi-carrier data, in which the frequency interval of four carriers on which the same data is encoded is 8×W (. f)=8×4.3125 KHz and the frequency band W of four carriers is 4.3125 KHz, as shown in FIG. 5(d), are transmitted over the power line 30 while designating the address, the node number, etc. of other power line communication system 27 as the communication destination, the receiving system of the power line communication system 27 as the communication destination performs an opposite operation to that in the above transmitting system side.

More particularly, the power line coupling circuit (HPF) 18 receives the multi-carrier data, as shown in FIG. 5(d), from the power line 30. Then, the low-pass filter (LPF) 19 removes the noises from the serial multi-carrier data received via the power line coupling circuit 18. Then, the receiving AMP 20 converts the data into a voltage level which is in the control range of the A/D converter 22 and then outputs them to the sample-hold circuit 21. The sample-hold circuit 21 holds the serial multi-carrier data whose voltage level has been converted for a convert time of the A/D converter, and then outputs the data to the A/D converter 22. Then, the A/D converter 22 analog/digital- converts the serial multi-carrier data.

The operation is similar to the operation of the receiving system of the above embodiment 1 up to here.

Then, in the embodiment 3, the serial-parallel convening circuit (S/P) 23 converts the serial data from the A/D converter 22 into parallel data, and then outputs them to the Fourier transform circuit (FFT) 24. The Fourier transform circuit (FFT) 24 Fourier-transforms the parallel data to transform the time-base multi-carrier data to the frequency-base multi-carrier data, and then outputs them to the QAM decoder 25.

The QAM decoder 25 of the embodiment 3 receives merely the carrier, which has no or least influence of the noises, out of four carriers below the cut-off frequency as shown in FIG. 2(d), decodes such carrier by the QAM-decoding, and outputs it to the data synthesizer 26. Then, the data synthesizer 26 synthesizes the QAM-decoded data, so that the received data can be obtained.

Therefore, according to the receiving system of the power line communication system 27 of the embodiment 3, like the case of the transmitting system, even if the noises from the power line 30 are concentrated upon the certain frequency band, the data reception which is secure against the power line noises correspondingly can be achieved with the inexpensive configuration since the multi-carrier data, in which the same data are encoded on all four sub-carriers constituting the multi-carrier whose carrier frequency interval is 8×W (. f)=8×4.3125 KHz, as shown in FIG. 5(d), can be received and then the data on the carrier in any frequency band which is less affected by the noises can be decoded.

In addition, according to the power line communication system according to the embodiment 3, like the case of the power line communication system according to the embodiments 1 and 2, even when the data communication with the higher or lower speed power line communication system than the embodiment 3, which communicates the multi-carrier data whose carrier frequency band W is the same and whose frequency interval . f is a measure or multiple of the frequency interval (8×4.3125 KHz) of the multi-carrier data transmitted over the power line 30 of the embodiment 3, must be carried out, the power line communication system according to the embodiment 3 can transmit/receive the multi-carrier data to/from the higher or lower speed power line communication system without improvement, etc. if it is arranged in advance between both power line communication systems that the data should be encoded and decoded to load only on the carrier constituting the multi-carrier of the power line communication system on the lower speed side.

### (4) Embodiment 4

Next, an embodiment 4 of a multi-carrier communication system according to the present invention will be explained with reference to the drawings.

In this case, this embodiment 4 and subsequent embodiments 5 to 8 have only a configuration of the receiving system of the multi-carrier communication system according to the present invention as a feature. For this reason, explanation will be made under the assumption that the transmitting system for transmitting the multi-carrier data to the receiving system in embodiments 4 to 8 transmits the multi-carrier data in which the same data are encoded on a plurality of carriers constituting the multi-carrier.

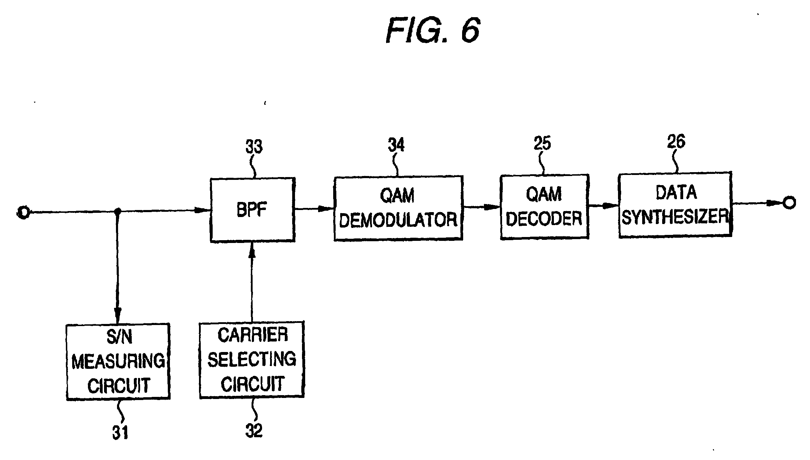

FIG. 6 is a view showing a partial configuration of the embodiment 4 of the multi-carrier communication system according to the present invention, and shows only a configuration after the serial-parallel converting circuit (S/P) 23 in the receiving system according to the present invention. Therefore, this embodiment 4 can be combined with any transmitting system in the above embodiments 1 to 3, and shows a configuration which is inserted in place of the Fourier transform circuit (FFT) 24, the low-pass filters (LPFs) 24a to 24d, the QAM decoder 25, and the data synthesizer 26 in FIG. 1, for example. The explanation will be made by labeling the same numerals to the same constituent elements as the above embodiments.

In FIG. 6, 25 denotes a QAM decoder; 26, a data synthesizer; 31, a S/N measuring circuit; 32, a carrier selecting circuit; 33, a band-pass filter (BPF) as a carrier selecting means; 34, a QAM demodulator as a frequency-base data converting means.

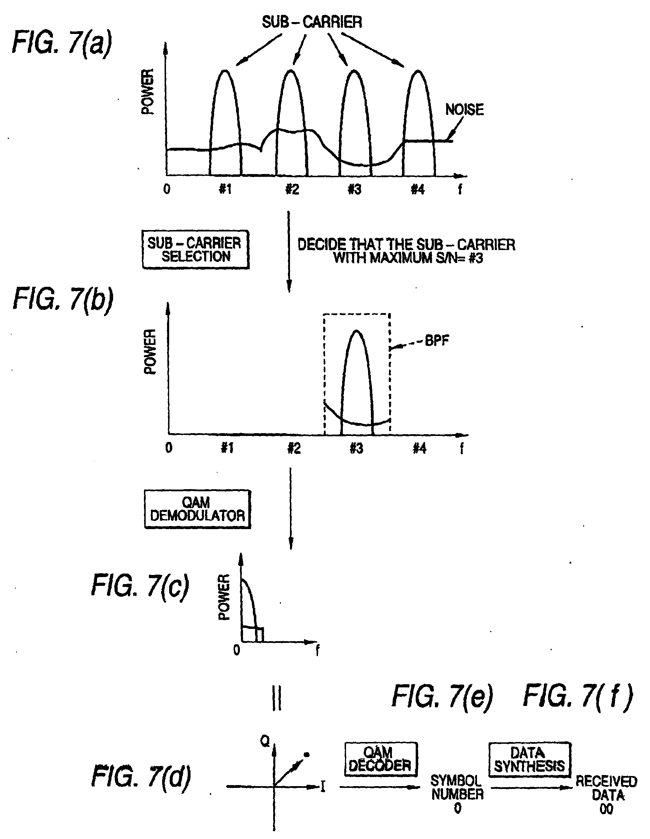

FIGS. 7(a) to 7(f) are views showing a frequency spectrum, a value, etc. of the multi-carrier data at respective time points in the power line communication system according to the embodiment 4 shown in FIG. 6 respectively.

More particularly, FIG. 7(a) shows a frequency spectrum of the multi-carrier data which are output from the serial-parallel convening circuit (S/P) 23 and input into the BPF 33 and the S/N measuring circuit 31, FIG. 7(b) shows an output frequency spectrum of the BPF 33, FIG. 7(c) shows an output frequency spectrum of the QAM demodulator 34, FIG. 7(d) shows signal point arrangement of an output signal of the QAM demodulator 34, FIG. 7(e) shows a QAM-decoded symbol number, and FIG. 7(f) shows received data after data synthesis.

Next, an operation will be explained with reference to the drawings. Since operations until the multi-carrier data that are output from the serial-parallel convening circuit (S/P) 23 are input into the BPF 33 and the S/N measuring circuit 31 are similar to the case in the above embodiments 1 to 3, merely subsequent operations will be explained.

First, the multi-media data which consist of a plurality (four in the embodiment 4, like the case in the above embodiments 1 to 3) of sub-carriers as shown in FIG. 7(a) is output from the serial-parallel convening circuit (S/P) 23 and input into the BPF 33 and the S/N measuring circuit 31.

The S/N measuring circuit 31 measures S/N of a plurality of sub-carriers every carrier and then outputs it to the carrier selecting circuit 32. The carrier selecting circuit 32 receives S/N carrier by carrier and then outputs a selection signal to the BPS 33 to select the sub-carrier with the largest S/N.

As shown in FIG. 7(b), the BPF 33 controls the passing frequency based on the selection signal from the carrier selection circuit 32 such that one sub-carrier with the largest S/N should be selected, and then outputs one selected sub-carrier to the QAM demodulator 34. In this case, in FIG. 7(b), the sub-carrier #3 is selected as the sub-carrier with largest S/N.

Then, as shown in FIG. 7(c), the QAM demodulator 34 QAM-demodulates only the sub-carrier #3 with the largest S/N, which is selected by the BPF 33, and then output it to the QAM decoder 25. In this case, FIG. 7(d) shows signal point arrangement of the sub-carrier #3 shown in FIG. 7(c) in four-phase QAM.

The QAM decoder 25 QAM-decodes the data on the sub- carrier #3 with the largest S/N, which is QAM-demodulated by the QAM demodulator 34, as shown in FIG. 7(d), to decode it into a symbol number "0", as shown in FIG. 7(e), for example.

Finally, the data synthesizer 26 synthesizes the symbol number which is QAM-decoded and decoded and shown in FIG. 7(e), whereby received data "00", as shown in FIG. 7(f), for example, can be obtained.

Hence, according to the receiving system of the power line communication system of the embodiment 4, since the sub-carrier in the frequency band having the largest S/N is selected from a plurality of carriers constituting the multi-carrier and then decoded, the data reception which is secure against the power line noises correspondingly can be achieved with the inexpensive configuration if the multi-carrier data in which the same data are encoded on respective sub-carriers can be received.

In the embodiment 4, explanation has been given by using the QAM demodulator 34. In the present invention, it is a matter of course that the FFT explained in above embodiments may be employed instead of the QAM demodulator 34.

### (5) Embodiment 5

Next, an embodiment 5 of a multi-carrier communication system according to the present invention will be explained with reference to the drawings.

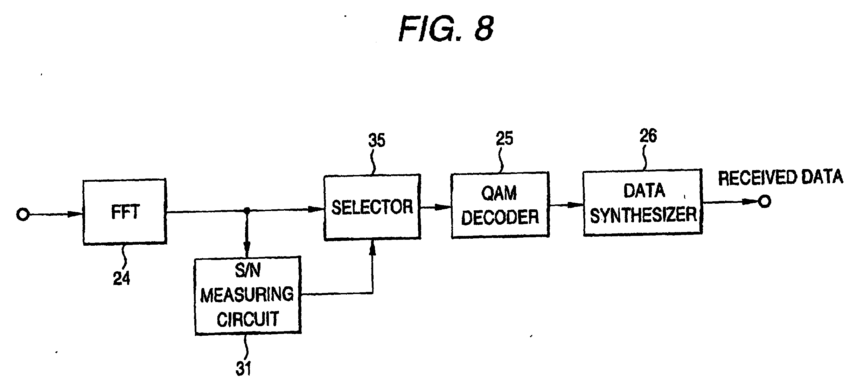

FIG. 8 is a view showing a partial configuration of the embodiment 5 of the multi-carrier communication system according to the present invention, and shows only a configuration after the serial-parallel converting circuit (S/P) 23 in the receiving system according to the present invention, like FIG. 6 of the above embodiment 4. Therefore, as in the embodiment 4, the embodiment 5 can be combined with any transmitting system in the above embodiments 1 to 3, and shows a configuration which is inserted in place of the Fourier transform circuit (FFT) 24, the low-pass filters (LPFs) 24a to 24d, the QAM decoder 25, and the data synthesizer 26 in FIG. 1, for example. The explanation will be given by attaching the same numerals to the same constituent elements as the above embodiments.

In FIG. 8, 24 denotes the FFT; 25, the QAM decoder; 26, the data synthesizer; 31, the S/N measuring circuit; and 35, a selector as the carrier selecting means. In the embodiment 4, unlike the receiving system of the embodiment 1 shown in FIG. 1, the low-pass filters (LPFs) 24a to 24d are omitted between the Fourier transform circuit (FFT) 24 and the selector 35.

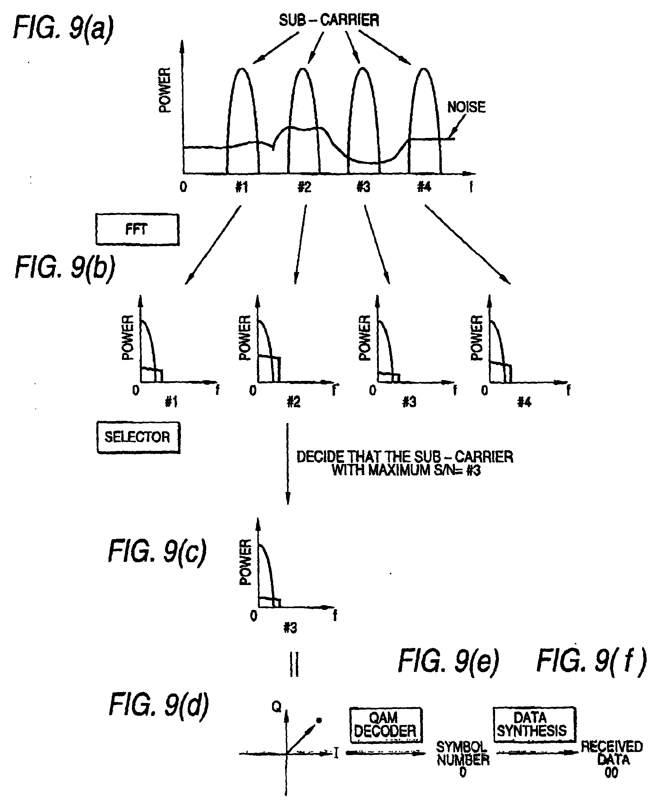

FIGS. 9(a) to 9(f) are views showing a frequency spectrum of multi-carrier data on a frequency base at respective time points in a power line communication system according to the embodiment 5 shown in FIG. 8 respectively.

More particularly, FIG. 8(a) shows a frequency spectrum of the multi-carrier data which are output from the serial-parallel converting circuit (S/P) 23 and input into the Fourier transform circuit (FFT) 24, FIG. 8(b) shows an output frequency spectrum of the Fourier transform circuit (FFT) 24, FIG. 8(c) shows an output frequency spectrum of the selector 35, FIG. 8(d) shows signal point arrangement of an output signal of the selector 35, FIG. 8(e) shows a symbol number which is QAM-decoded by the QAM decoder 25, and FIG. 8(f) shows received data after the data synthesis conducted by the data synthesizer 26.

Next, an operation will be explained with reference to the drawings. Since operations until the multi-carrier data that are output from the serial-parallel converting circuit (S/P) 23 are input into the FFT 24 are similar to the case in the above embodiments 1 to 4, merely subsequent operations will be explained.

First, the multi-carrier data consisting of a plurality (four in the embodiment 5, like the case in the above embodiments) of sub-carriers as shown in FIG. 9(a) is output from the serial-parallel converting circuit (S/P) 23 (see FIG.1) and input into the Fourier transform circuit (FFT) 24.

The Fourier transform circuit (FFT) 24 Fourier-transforms the multi-carrier data consisting of four sub-carriers to transform it into frequency-base data that have the same frequency band, as shown in FIG. 9(b), and then outputs them to the S/N measuring circuit 31 and the selector 35.

The S/N measuring circuit 31 measures the S/N of the frequency-base data of respective Fourier-transformed sub-carriers, and then outputs a measured value to the selector 35.

The selector 35 receives S/N of the frequency-base data of respective Fourier-transformed sub-carriers from the S/N measuring circuit 31, selects one sub-carrier with the largest S/N based on the S/N, as shown in FIG. 9(c), and then outputs it to the QAM decoder 25. In this case, in FIG. 9(c), like the case in the embodiment 4 shown in FIG. 7, the sub-carrier #3 is selected as the sub-carrier with the maximum S/N. FIG. 9(d) shows signal point arrangement of the sub-carrier #3 shown in FIG. 9(c) in four-phase QAM.

The QAM decoder 25 QAM-decodes the QAM-demodulated data on the sub-carrier #3 with the maximum S/N, which are supplied from the selector 35, as shown in FIG. 9(d), to decode them into a symbol number "0", as shown in FIG. 9(e), for example.

Finally, the data synthesizer 26 synthesizes the symbol number which is QAM-decoded and decoded and shown in FIG. 9(e), whereby the received data "00", as shown in FIG. 9(f), for example, can be obtained.

Therefore, according to the receiving system of the power line communication system of the embodiment 5, since a plurality of sub-carriers constituting the multi-carrier are Fourier-transformed every sub-carrier and then one sub-carrier in the frequency band having the largest S/N is selected after the Fourier-transformation and is decoded, the data reception which is secure against the power line noises correspondingly can be achieved with the inexpensive configuration, like the case of the above embodiment 4, if the multi-carrier data in which the same data are encoded on respective sub-carriers can be received.

### (6) Embodiment 6

Next, an embodiment 6 of a multi-carrier communication system according to the present invention will be explained with reference to the drawings.

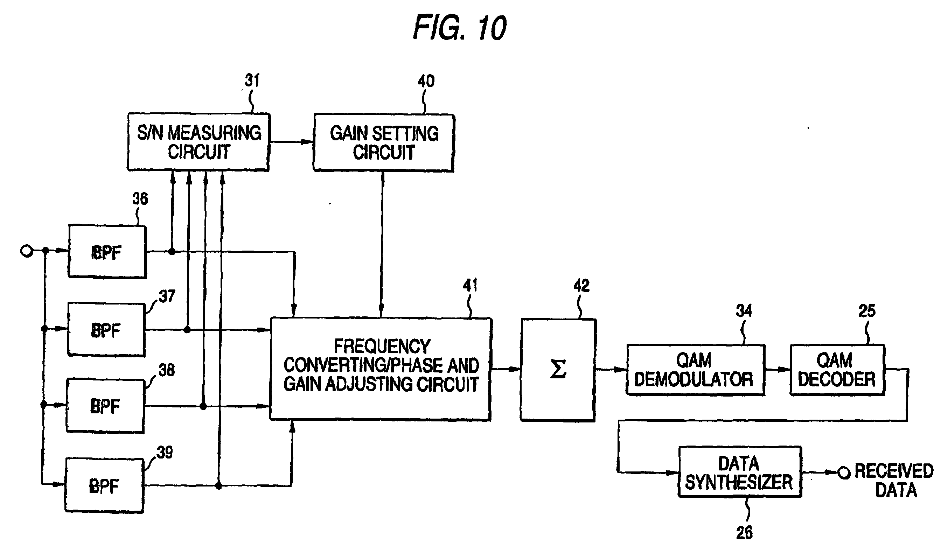

FIG. 10 is a view showing a partial configuration of the embodiment 6 of the multi-carrier communication system according to the present invention, and shows only a configuration after the serial-parallel converting circuit (S/P) 23 in the receiving system according to the present invention. Therefore, the embodiment 6 can be combined with any transmitting system in the above embodiments 1 to 3, and shows a configuration which is inserted in place of the Fourier transform circuit (FFT) 24, the low-pass filters (LPFs) 24a to 24d, the QAM decoder 25, and the data synthesizer 26 in FIG. 1, for example. The explanation will be given by attaching the same numerals to the same constituent elements as the above embodiments.

In FIG. 10, 25 denotes the QAM decoder; 26, the data synthesizer; 31, the S/N measuring circuit; 34, the QAM demodulator; 36 to 39, band-pass filters (BPFs) as sub-carrier cutting-out means; 40, a gain setting circuit; 41, a frequency converting/phase and gain adjusting circuit; and 42, an adder circuit.

FIGS. 11(a) to 11(h) are views showing a frequency spectrum, a value, etc. of multi-carrier data at respective time points in the power line communication system according to the embodiment 6 shown in FIG.10 respectively.

More particularly, FIG. 11(a) shows a frequency spectrum of the multi-carrier data which are output from the serial-parallel converting circuit (S/P) 23 and input into the BPFs 36 to 39, FIG. 11(b) shows an output frequency spectrum of the BPFs 36 to 39, FIG. 11(c) shows an output frequency spectrum of the frequency converting/phase and gain adjusting circuit 41, FIG. 11(d) shows an output frequency spectrum of the adder circuit 42, FIG. 11(e) shows an output frequency spectrum of the QAM demodulator 34, FIG. 11(f) shows signal point arrangement of an output signal of the QAM demodulator 34, FIG. 11(g) shows a QAM-decoded symbol number, and FIG. 11(h) shows received data after the data synthesis.

Next, an operation will be explained with reference to the drawings. Since operations until the multi-carrier data that are output from the serial-parallel converting circuit (S/P) 23 are input into the BPF 33 and the S/N measuring circuit 31 are similar to the case in the above embodiments 1 to 5, merely subsequent operations will be explained.

First, the multi-carrier data consisting of a plurality (four in the embodiment 6, like the case in the above embodiments) of sub-carriers as shown in FIG. 11(a) is output from the serial-parallel converting circuit (S/P) 23 and input into four BPFs 36 to 39 which are provided to correspond to respective sub-carriers.

Then, the BPFs 36 to 39 pass only the corresponding sub-carrier of the multi-carrier data respectively to thus obtain the output frequency spectrum shown in FIG. 11(b). More specifically, their passing frequencies are set such that the BPF 36 passes only the sub-carrier #1 of the multi-carrier data #1 to #4, the BPF 37 passes only the sub-carrier #2 of the multi-carrier data #1 to #4, the BPF 38 passes only the sub-carrier #3 of the multi-carrier data #1 to #4, and the BPF 39 passes only the sub-carrier #4 of the multi-carrier data #1 to #4.

Then, the S/N measuring circuit 31 measures S/N every sub-carrier output from the BPFs 36 to 39, and then outputs them to the gain setting circuit 40. The gain setting circuit 40 sets gains of respective sub-carriers based on the S/N of the sub-carriers measured by the S/N measuring circuit 31, and then outputs them to the frequency converting/phase and gain adjusting circuit 41.

The frequency convening/phase and gain adjusting circuit 41 converts different frequencies of the sub-carriers into the same frequency (fc in FIG. 11(c)), adjusts phases of the sub-carriers into the same phase, and adjusts gains of respective sub-carriers based on the gain setting of the sub-carries set by the gain setting circuit 40, and then output the frequency spectrum data shown in FIG. 11(c) to the adder circuit 42. The gain adjusting approach of respective sub-carriers will be explained in the following. For example, as shown in FIG. 11(c), the gain of the data on the sub-carrier #3 is increased since its S/N is best, the gain of the data on the sub-carrier #1 is increased secondly since its S/N is second best, the gain of the data on the sub-carrier #4 is increased thirdly since its S/N is third best, and the gain of the data on the sub-carrier #2 is adjusted to the lowest since its S/N is worst.

Then, the adder circuit 42 adds the data of the sub-carriers #1 to #4 having the frequency spectrum, as shown in FIG. 11(c), whose gain, etc. are adjusted based on the S/N by the frequency converting/phase and gain adjusting circuit 41 to obtain the frequency spectrum data whose S/N is improved, as shown in FIG. 11(d), and then outputs it to the QAM demodulator 34. The reason for that the S/N can be improved by the addition of the sub-carriers can be given as follows. That is, in many cases a power level is not normally increased because of the plus-minus cancellation by the addition since normally the noises are irregular, while a power level is increased correspondingly by the addition since the data loaded on the sub-carriers are same data and are regular. Further, in the embodiment 4, the gains of the sub-carriers are adjusted more highly by the frequency convening/phase and gain adjusting circuit 41 based on the gain setting of respective sub-carriers as the sub-carriers have the larger S/N. Therefore, the S/N becomes large rather than the case where respective sub-carriers are added unless the gain setting of respective sub-carriers is executed.

After this, like the case of the above embodiment 4 shown in FIG. 6, the QAM demodulator 34 QAM-demodulates the added data, as shown in FIG. 11(d), which are obtained by adding the data of the sub-carriers #1 to #4 by the adder circuit 42, and then outputs the QAM-demodulated data, as shown in FIG. 11(e), to the QAM decoder 25. In this case, FIG. 11(f) shows signal point arrangement of the added data shown in FIG. 11(e).

The QAM decoder 25 QAM-decodes the QAM-demodulated data from the QAM-demodulator 34, as shown in FIG. 11(f), to decode them into a symbol number "0", as shown in FIG. 11(g), for example. Finally, the data synthesizer 26 synthesizes the symbol number which is QAM-decoded and decoded and shown in FIG. 21(g), whereby the received data "00", as shown in FIG. 11(h), for example, can be obtained.

Therefore, according to the receiving system of the power line communication system of the embodiment 6, since the sub-carrier data of a plurality of sub-carriers constituting the multi-carrier are cut out every sub-carrier, then frequency-converted and phase-adjusted, and gain-adjusted such that the gain of the sub-carriers can be increased in response to S/N as the sub-carriers have the larger S/N, and added and then decoded, the sub-carriers whose S/N can be improved rather than the case of the sub-carriers alone can be decoded. Thus, like the cases of the embodiments 4, 5, if the multi-carrier data in which the same data are encoded on respective sub-carriers can be received, the data reception that is secure against the power line noises correspondingly can be achieved with the inexpensive configuration.

In the embodiment 6, the explanation has been given by using the QAM demodulator 34. Like the case of the above embodiment 4, it is a matter of course that the FFT may be employed in place of the QAM demodulator 34.

Besides, in the embodiment 6, as described above, in order to obtain the sub-carriers whose S/N can be improved, the S/N of respective carriers is measured by the S/N measuring circuit 31, the gains of respective carriers are set by the gain setting circuit 40 based on the S/N, the gain adjustment, etc. are performed by the frequency converting/phase and gain adjusting circuit 41, and the data are added by the adder circuit 42. However, the present invention is not limited to the above, the carriers may be added without the gain adjustment of respective carriers based on the S/N of respective carriers by omitting the gain adjustment by virtue of the S/N measuring circuit 31, the gain setting circuit 40, and the frequency converting/ phase and gain adjusting circuit 41. In such case, as described above, the S/N of the added sub-carriers are lowered, of course, rather than the S/N of the sub-carriers added after the gains of respective carriers have been adjusted in response to the S/N. This is because normally the noises are irregular and thus in many cases normally the power level is not increased, i.e., reduced because of the plus-minus cancellation by the addition, and as a result in many cases the S/N of the added sub-carriers can be improved rather than the maximum value of the S/N of the sub-carriers prior to the addition. Therefore, in this case, the frequency converting/phase and gain adjusting circuit 41 executes merely the frequency conversion and the phase adjustment.

### (7) Embodiment 7

Next, an embodiment 7 of a multi-carrier communication system according to the present invention will be explained with reference to the drawings.

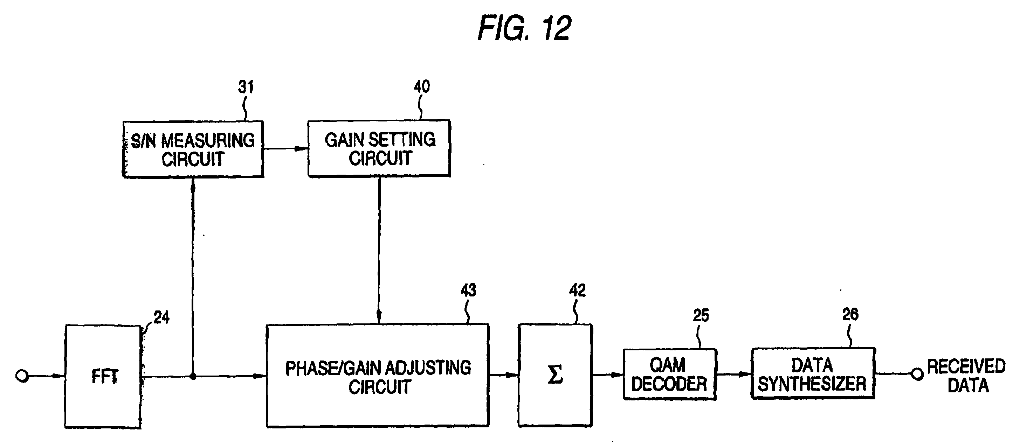

FIG. 12 is a view showing a partial configuration of the embodiment 7 of the multi-carrier communication system according to the present invention, and shows only a configuration after the serial-parallel converting circuit (S/P) 23 in the receiving system according to the present invention, like above FIG. 6. Therefore, like the embodiments 4 to 6, the embodiment 7 can be combined with any transmitting system in the above embodiments 1 to 3, and shows a configuration which is inserted in place of the Fourier transform circuit (FFT) 24, the low-pass filters (LPFs) 24a to 24d, the QAM decoder 25, and the data synthesizer 26 in FIG. 1, for example. The explanation will be given by affixing the same numerals to the same constituent elements as the above embodiments.

In FIG.12, 24 denotes the FFT; 25, the QAM decoder; 26, the data synthesizer; 31, the S/N measuring circuit; 40, the gain setting circuit; 42, the adder circuit (Σ); and 43, a phase/gain adjusting circuit. In the embodiment 7, unlike the receiving system of the embodiment 1 shown in FIG.1, the low-pass filters (LPFs) 24a to 24d are omitted between the Fourier transform circuit (FFT) 24 and the selector 35.

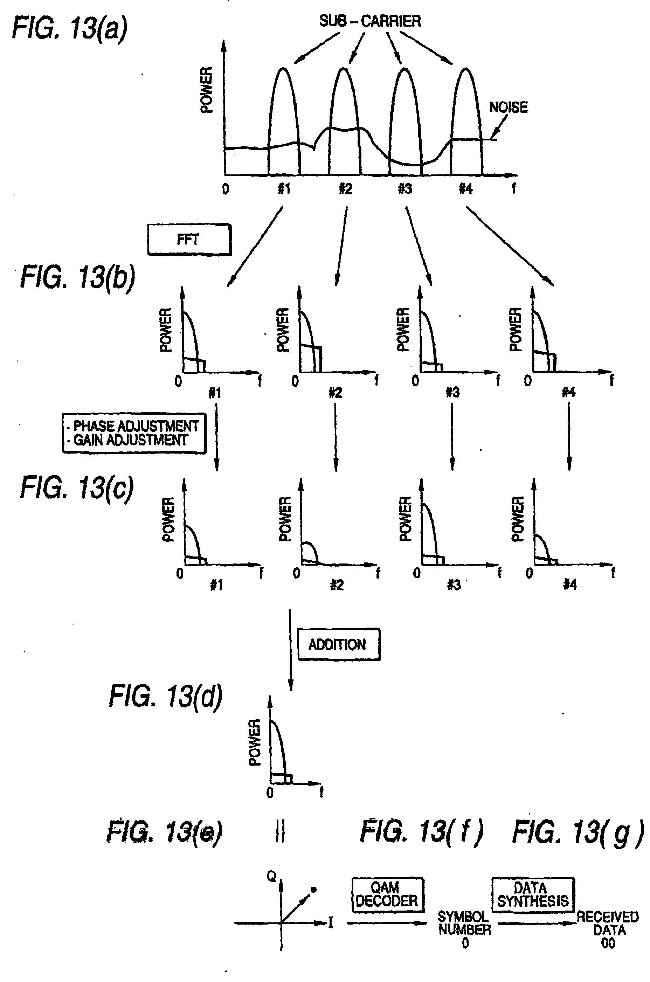

FIGS. 13(a) to 13(g) are views showing a frequency spectrum, a value, etc. of the multi-carrier data at respective time points in the power line communication system according to the embodiment 7 shown in FIG.12 respectively.

More particularly, FIG. 13(a) shows a frequency spectrum of the multi-carrier data which are output from the serial-parallel converting circuit (S/P) 23 and input into the Fourier transform circuit (FFT) 24, FIG. 13(b) shows an output frequency spectrum of the Fourier transform circuit (FFT) 24, FIG. 13(c) shows an output frequency spectrum of the phase/gain adjusting circuit 43, FIG. 13(d) shows an output frequency spectrum of the adder circuit 42, FIG. 13(e) shows signal point arrangement of an output signal of the QAM demodulator 34, FIG. 13(f) shows a QAM-decoded symbol number, and FIG. 13(g) shows received data after the data synthesis.

Next, an operation will be explained with reference to the drawings. Since operations until the multi-carrier data that are output from the serial-parallel converting circuit (S/P) 23 are input into the BPF 33 and the S/N measuring circuit 31 are similar to the case in the above embodiments 1 to 6, merely subsequent operations will be explained.

First, the multi-carrier data consisting of a plurality (four in the embodiment 7, like the case in the above embodiments) of sub-carriers as shown in FIG. 13(a) is output from the serial-parallel converting circuit (S/P) 23 (see FIG.1) and input into the Fourier transform circuit (FFT) 24.

The Fourier transform circuit (FFT) 24 Fourier-transforms the multi-carrier data consisting of four sub-carriers to transform it into frequency-base data that have the same frequency band, as shown in FIG. 13(b), and then outputs them to the S/N measuring circuit 31 and the phase/gain adjusting circuit 43.

Like the case of the embodiment 5, the S/N measuring circuit 31 measures the S/N of the frequency-base data of a plurality of Fourier-transformed sub-carriers, and then outputs measured results to the gain setting circuit 40. The gain setting circuit 40 sets the gains based on the S/N of the measured sub-carriers such that the gain is increased larger as the S/N of the sub-carrier becomes better, and then outputs them to the phase/gain adjusting circuit 43.

The phase/gain adjusting circuit 43 adjusts the phases of the sub-carriers of the frequency-base data, which are fed from the FFT 24 and have the same frequency band, to the same phase and also adjusts the gains based on the gain setting of the sub-carries set by the gain setting circuit 40, and then outputs the frequency spectrum data shown in FIG. 13(c) to the adder circuit 42.

FIG. 13(c) will be explained simply in the following. Like the case shown in FIG. 11(c), the gain of the data on the sub-carrier #3 is increased since its S/N is best, the gain of the data on the sub-carrier #1 is increased secondly since its S/N is second best, the gain of the data on the sub-carrier #4 is increased thirdly since its S/N is third best, and the gain of the data on the sub-carrier #2 is adjusted to the lowest since its S/N is worst. In this case, the case of the embodiment 7 shown in FIG. 13(c) is derived after the Fourier transformation, unlike the case of the embodiment 6 shown in FIG. 11(c).

Then, the adder circuit 42 adds the data of the Fourier-transformed sub-carriers #1 to #4 having the frequency spectrum, as shown in FIG. 13(c), fed from the phase/gain adjusting circuit to obtain the frequency spectrum data, as shown in FIG. 13(d), and then outputs them to the QAM decoder 25. In this case, FIG. 13(e) shows signal point arrangement of the added data shown in FIG. 13(d).

Thereafter, like the above embodiments, the QAM decoder 25 QAM-decodes the added data from the adder circuit 42, as shown in FIG. 13(e), to decode it into a symbol number "0", as shown in FIG. 13(f), for example. In the end, the data synthesizer 26 synthesizes the symbol number which is QAM-decoded and decoded and shown in FIG. 13(g), whereby the received data "00", as shown in FIG. 13(g), for example, can be obtained.

Therefore, according to the receiving system of the power line communication system of the embodiment 7, since the multi-carrier consisting of a plurality of sub-carriers is Fourier-transformed into the frequency component data by the FFT 24, then phase-adjusted and gain-adjusted in response to the S/N, and then added and decoded, the sub-carriers whose S/N can be improved rather than the case of the sub-carriers alone can be decoded. Thus, like the cases of the embodiments 4 to 6, when the multi-carrier data in which the same data are encoded on respective sub-carriers are received, the data reception that is secure against the power line noises correspondingly can be achieved with the inexpensive configuration.

In the embodiment 7, as described above, in order to obtain the sub-carriers whose S/N can be improved, the S/N of respective carriers is measured by the S/N measuring circuit 31, the gain is set every carrier by the gain setting circuit 40 based on the S/N, the gain adjustment, etc. are carried out by the phase/gain adjusting circuit 43, and the data are added by the adder circuit 42. However, the present invention is not limited to the above, respective carriers may be added without the gain adjustment of respective carriers based on the S/N of respective carriers by omitting the gain adjustment by virtue of the S/N measuring circuit 31, the gain setting circuit 40, and the phase/gain adjusting circuit 43. In such case, the phase/gain adjusting circuit 43 carries out simply the phase adjustment.

### (8) Embodiment 8

Next, an embodiment 8 of a multi-carrier communication system according to the present invention will be explained with reference to the drawings.

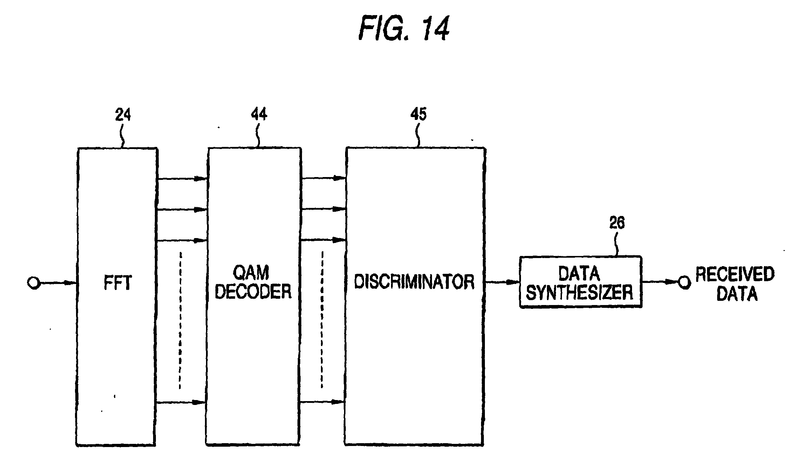

FIG. 14 is a view showing a partial configuration of an embodiment 8 of the multi-carrier communication system according to the present invention, and shows only a configuration after the serial-parallel converting circuit (S/P) 23 in the receiving system according to the present invention, like above FIG. 6. Therefore, like the embodiments 4 to 7, the embodiment 8 can be combined with any transmitting system in the above embodiments 1 to 3, and shows a configuration which is inserted in place of the Fourier transform circuit (FFT) 24, the low-pass filters (LPFs) 24a to 24d, the QAM decoder 25, and the data synthesizer 26 in FIG. 1, for example. The explanation will be given by affixing the same numerals to the same constituent elements as the above embodiments.

In FIG. 14, 24 denotes the Fourier transform circuit (FFT); 26, the data synthesizer; 44, a QAM decoder; and 45, a discriminator. In the embodiment 8, unlike the receiving system of the embodiment 1 shown in FIG.1, the low-pass filters (LPFs) 24a to 24d are omitted between the Fourier transform circuit (FFT) 24 and the QAM decoder 44.

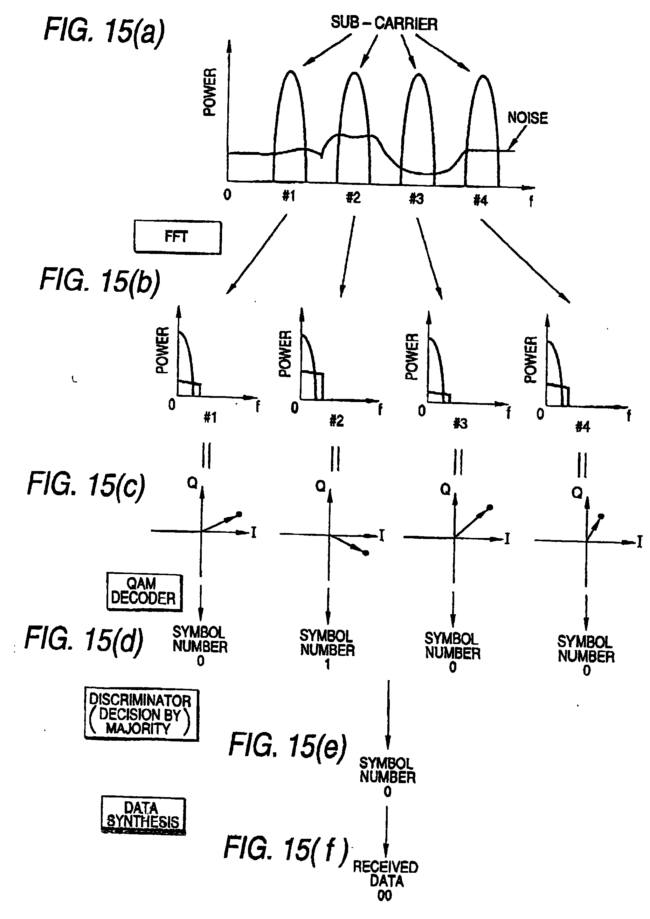

FIGS. 15(a) to 15(f) are views showing a frequency spectrum, a value, etc. of the multi-carrier data at respective time points in a power line communication system according to the embodiment 8 shown in FIG. 14 respectively.

More particularly, FIG. 15(a) shows a frequency spectrum of the multi-carrier data which are output from the serial-parallel converting circuit (S/P) 23 and input into the Fourier transform circuit (FFT) 24, (b) shows an output frequency spectrum of the Fourier transform circuit (FFT) 24, FIG. 15(c) shows signal point arrangement of an output signal of the Fourier transform circuit (FFT) 24, FIG. 15(d) shows a QAM-decoded symbol number, FIG. 15(e) shows a symbol number as an output of the discriminator 45, and FIG. 15(f) shows received data after the data synthesis.

Next, the operation will be explained with reference to the drawings. Since operations until the multi-carrier data that are output from the serial-parallel converting circuit (S/P) 23 are input into the FFT 24 are similar to the case in the above embodiments 1 to 6, merely subsequent operations will be explained.

First, the multi-carrier data consisting of a plurality (four in the embodiment 7, like the case in the above embodiments) of sub-carriers as shown in FIG. 13(a) is output from the serial-parallel converting circuit (S/P) 23 (see FIG. 1) and input into the Fourier transform circuit (FFT) 24.

The Fourier transform circuit (FFT) 24 Fourier-transforms the multi-carrier data consisting of four sub-carriers to transform them into the frequency-base data that have the same frequency band of the sub-carriers, as shown in FIG. 15(b), and then outputs them to the QAM decoder 44. FIG. 15(c) shows signal point arrangement of the data which have been subjected to the Fourier transformation shown in FIG. 15(b).

The QAM decoder 44 QAM-decodes the Fourier transformed data from the FFT 24 every sub-carrier, as shown in FIG. 15(c), to decode into the symbol numbers every sub-carrier, as shown in FIG. 15(d), and outputs them to the discriminator 45. FIG. 15(d) will be explained simply. The data on the sub-carrier #1 is decoded into the symbol number "0", for example, the data on the sub-carrier #2 is decoded into the symbol number "1", for example, the data on the sub-carrier #3 is decoded into the symbol number "0", for example, and the data on the sub-carrier #4 is decoded into the symbol number "0", for example.

The discriminator 45 receives the symbol numbers of respective sub-carriers from the QAM decoder 44, as shown in FIG. 15(d), then selects the to-be-output symbol number based on the decision by majority, as shown in FIG. 15(e), i.e., selects the symbol number, which is most often output, out of the sub-carriers, and then outputs it to the data synthesizer 26. In the case shown in FIG. 15(e), since the decoded data of the symbol number "0" appears most often, as shown in FIG. 15(d), the decoded data of the symbol number "0" would be selected.

The data synthesizer 26 synthesizes the QAM-decoded and decoded data, which are selected by the discriminator 45 based on the decision by majority, in the same manner as the above embodiments, whereby the received data "00", as shown in FIG. 15(f), for example, can be obtained.

Hence, according to the receiving system of the power line communication system of the embodiment 8, the multi-carriers consisting of a plurality of sub-carriers are Fourier-transformed every carrier into the frequency component data by the FFT 24, then the frequency component data on respective carriers are QAM-decoded every sub-carrier, and then the symbol number is selected from symbol numbers of respective QAM-decoded carriers based on the decision by majority. Therefore, even if the noises from the power line are concentrated upon the certain carrier frequency band to deform the data on the carrier, etc., the data reception that is secure against the power line noises correspondingly can be achieved with the inexpensive configuration because the data on other carrier which has the largest certainty can be selected based on the decision by majority.

### Industrial Applicability

As described above, according to the present invention, since the data communication can be carried out by using the multi-carrier modulation system, the communication environment which is quite suitable for the network in the small-scale enterprise, the home, etc., and is operated at a low cost and a high transmission rate can be provided. In addition, since the frequency band of the overall multi-carriers can be expanded the predetermined multiple the output of the inverse Fourier transforming means by the up-sampling means, etc., the data transmission/reception which is secure against the noises correspondingly can be achieved with the inexpensive configuration even if the noises of the communication line (transmission line) are concentrated upon the certain frequency band.

Also, according to another invention, even if, for example, the frequency band of the transmitted/received multi-carrier data is decided to the predetermined multiple of the frequency interval of the multi-carrier data output from the inverse Fourier transforming means in order to reduce the influence of the noises, it is requested merely to add a cutting-off means for cutting off the frequency band of respective carriers into one over the predetermined multiple and an up-sampling means for up-sampling the multi-carrier data by using such predetermined multiple. Therefore, the number of inputs/outputs of the multi- carrier encoding means, the inverse Fourier transforming means, and the Fourier transforming means can be reduced, and thus small size and inexpensive means are available respectively, and as a result the cost can be considerably reduced.

Also, according to another invention, even if the data transmission/reception with the high speed power line communication system for transmitting/receiving the multi-carrier data whose frequency band and frequency interval are the reference frequency must be carried out, such data communication with the high speed multi-carrier communication system can be achieved without improvement if it is previously arranged between both power line communication systems on which multi-carrier the data should be encoded by the multi-carrier communication system of the present invention.

Also, according to another invention, since respective channels of the data which are encoded on respective four multi-carriers from the low frequency to the high frequency in compliance with the PN sequence at respective times are set differently, the data can transmitted/received via other carriers even if the certain carrier is lost by the noises. Therefore, if different data are encoded on respective carriers, such a situation can be eliminated that all data are lost, and thus the noise resistance against the power line noises can be improved, and also the data communication can be achieved with higher reliability.

Also, according to another invention, the transmitting system encodes the same data on all multi-carriers, while the receiving system receives the multi-carrier data in which the same data are encoded on all sub-carriers constituting the multi-carrier, and decodes the multi-carrier data in any frequency band that is less affected by the noises. Therefore, even if the noises from the power line are concentrated upon the certain frequency band, the data reception that is secure against the power line noises correspondingly can be achieved.

Also, according to another invention, even if the noises from the power line are concentrated upon the certain frequency band, the multi-carrier data in which the same data are encoded on all sub-carriers of the multi-carrier whose frequency band is expanded can be received and then the sub-carrier data in the frequency band having the largest S/N can be selected and then decoded. Therefore, the data reception that is secure against the power line noises correspondingly can be achieved with the inexpensive configuration.

Also, according to another invention, even if the noises from the power line are concentrated upon the certain frequency band, the multi-carrier data in which the same data are encoded on all sub-carriers of the multi-carrier whose frequency band is expanded can be received and Fourier-transformed and then the sub-carrier data in the frequency band having the largest S/N can be selected and then decoded. Therefore, the data reception that is secure against the power line noises correspondingly can be achieved with the inexpensive configuration.

Also, according to another invention, even if the noises from the power line are concentrated upon the certain frequency band, the multi-carrier data in which the same data are encoded on all sub-carriers of the multi-carrier whose frequency band is expanded can be received, frequency-converted, phase-adjusted and gain-adjusted in response to S/N and then the sub-carrier data can be added and then decoded. Therefore, the data reception that is secure against the power line noises correspondingly can be achieved with the inexpensive configuration.

Also, according to another invention, even if the noises from the power line are concentrated upon the certain frequency band, the multi-carrier data in which the same data are encoded on all sub-carriers of the multi-carrier whose frequency band is expanded can be received, Fourier-transformed, phase-adjusted and gain-adjusted in response to S/N and then the sub-carrier data can be added and then decoded. Therefore, the data reception that is secure against the power line noises correspondingly can be achieved with the inexpensive configuration.

Also, according to another invention, even if the noises from the power line are concentrated upon the certain frequency band, the multi-carrier data in which the same data are encoded on all sub-carriers of the multi-carrier whose frequency band is expanded can be received, Fourier-transformed, and QAM-decoded every sub-carrier and then the symbol number which has the largest certainty based on the decision by majority can be selected from the symbol numbers which are QAM-decoded every sub-carrier. Therefore, the data reception that is secure against the power line noises correspondingly can be achieved with the inexpensive configuration.

## Claims

1. A multi-carrier communication system comprising:
a multi-carrier encoding means for encoding input data into multi-carrier data, in which a frequency interval between respective carriers is a reference frequency, by modulating the input data according to a multi-carrier modulation system;
a cutting-off means for cutting off bandwidths of respective carriers in the multi-carrier data of a multi-carrier modulation/demodulation system supplied from the multi-carrier encoding means into one over a predetermined multiple;
an inverse Fourier transforming means for inversely Fourier-transforming the multi-carrier data from the cutting-off means;
an up-sampling means for up-sampling the multi- carrier data from the inverse Fourier transforming means by the predetermined multiple to output the multi-carrier data in which an inter-carrier frequency is set to the predetermined multiple of the reference frequency and bandwidths of respective carriers are set equally to bandwidths of respective carriers of the multi-carrier data which are encoded by the multi-carrier encoding means; and
a transmitting means for transmitting the multi-carrier data supplied from the up-sampling means.

2. A multi-carrier communication system comprising:
a receiving means for receiving multi-carrier data whose frequency interval between respective carriers is set to a predetermined multiple of a reference frequency;
a down-sampling means for down-sampling the multi-carrier data received by the receiving means to output the multi-carrier data in which an inter-carrier frequency is set to the reference frequency and each carrier bandwidth is set to one over the predetermined multiple of the carrier bandwidth of the multi-carrier data received by the receiving means;
a Fourier transforming means for Fourier-transforming the multi-carrier data from the down-sampling means; and
a decoding means for decoding the multi-carrier data from the Fourier transforming means.

3. A multi-carrier communication system comprising:
a multi-carrier encoding means for encoding input data into multi-carrier data, in which a frequency interval between carriers is a reference frequency, by modulating the input data according to a multi-carrier modulation system;
a cutting-off means for cutting off bandwidths of respective carriers in the multi-carrier data of a multi-carrier modulation/demodulation system supplied from the multi-carrier encoding means into one over a predetermined multiple;
an inverse Fourier transforming means for inversely Fourier-transforming the multi-carrier data from the cutting-off means;
an up-sampling means for up-sampling the multi- carrier data from the inverse Fourier transforming means by the predetermined multiple to output the multi-carrier data in which an inter-carrier frequency is set to the predetermined multiple of the reference frequency and bandwidths of respective carriers are set equally to bandwidths of respective carriers of the multi-carrier data which are encoded by the multi-carrier encoding means;
a transmitting means for transmitting the multi-carrier data supplied from the up-sampling means;
a receiving means for receiving the multi-carrier data whose frequency interval between respective carriers is set to the predetermined multiple of the reference frequency;
a down-sampling means for down-sampling the multi-carrier data received by the receiving means to output the multi-carrier data in which an inter-carrier frequency is set to the reference frequency and each carrier bandwidth is set to one over the predetermined multiple of the carrier bandwidth of the multi-carrier data received by the receiving means;
a Fourier transforming means for Fourier-transforming the multi-carrier data from the down-sampling means; and
a decoding means for decoding the multi-carrier data from the Fourier transforming means.

4. A multi-carrier communication system according to claim 1 or claim 3, wherein the multi-carrier encoding means outputs the multi-carrier data in which same data are encoded on respective carriers.

5. A multi-carrier communication system according to claim 1 or claim 3, wherein the multi-carrier encoding means outputs the multi-carrier data in which a channel of the data to be encoded on respective carriers is changed every time when the data are encoded on respective carriers.

6. A multi-carrier communication system comprising:
a multi-carrier encoding means for encoding input data only on one carrier of multi-carriers by modulating the input data according to a multi-carrier modulation system;
an inverse Fourier transforming means for inversely Fourier-transforming the multi-carrier data from the multi-carrier encoding means;
a cutting-off means for cutting off the multi-carrier data output from the inverse Fourier transforming means by a predetermined frequency; and
a transmitting means for transmitting the cut-off multi-carrier data.

7. A multi-carrier communication system comprising:
a receiving means for receiving multi-carrier data in which same data are encoded on respective carriers constituting multi-carriers; and
a multi-carrier decoding means for decoding the same data encoded on respective carriers, based on the multi-carrier data received by the receiving means.

8. A multi-carrier communication system according to claim 7, wherein the multi-carrier decoding means includes,
an S/N measuring means for measuring S/N of respective carriers constituting the multi-carrier data received by the receiving means,
a carrier selecting means for selecting carrier data having a largest S/N from the multi-carrier data received by the receiving means based on measured outputs of the S/N measuring means,
a frequency-base data converting means for converting the carrier data selected by the carrier selecting means into frequency-base data, and
a decoding means for decoding the frequency-base data from the frequency-base data converting means.

9. A multi-carrier communication system according to claim 7, wherein the multi-carrier decoding means includes,
a Fourier transforming means for Fourier-transforming the multi-carrier data received by the receiving means,
an S/N measuring means for measuring S/N of respective carriers constituting the multi-carrier data from the Fourier transforming means,
a carrier selecting means for selecting carrier data having a largest S/N from the multi-carrier data from the Fourier transforming means based on measured outputs of the S/N measuring means, and
a decoding means for decoding the carrier data selected by the carrier selecting means.

10. A multi-carrier communication system according to claim 7, wherein the multi-carrier decoding means includes,
a carrier cutting-out means for cutting out the multi-carrier data received by the receiving means every carrier,
an adjusting means for converting data which is cut out every carrier by the carrier cutting-out means into a same frequency and performing phase adjustment of the data,
an adding means for adding outputs from the adjusting means every carrier,
a frequency-base data converting means for converting added data from the adding means into frequency-base data, and
a decoding means for decoding the frequency-base data from the frequency-base data converting means.

11. A multi-carrier communication system according to claim 10, wherein the multi-carrier decoding means further includes,
an S/N measuring means for measuring S/N of data cut out every carrier by the carrier cutting-out means, and
a gain setting means for setting gain of the data from the carrier cutting-out means every carrier based on measured outputs of the S/N measuring means, wherein the adjusting means converts the data cut out every carrier by the carrier cutting-out means into a same frequency, adjusts phase of the data, and performs gain adjustment based on the gain set by the gain setting means.

12. A multi-carrier communication system according to claim 7, wherein the multi-carrier decoding means includes,
a Fourier transforming means for Fourier-transforming the multi-carrier data received by the receiving means,
an adjusting means for adjusting phase of the multi-carrier data being Fourier-transformed by the Fourier transforming means every carrier,
an adding means for adding outputs from the adjusting means every carrier, and
a decoding means for decoding added data from the adding means.

13. A multi-carrier communication system according to claim 12, wherein the multi-carrier decoding means further includes,
an S/N measuring means for measuring S/N of respective carriers constituting the multi-carrier data being Fourier-transformed by the Fourier transforming means every carrier, and
a gain setting means for setting gain of the multi-carrier data from the Fourier transforming means every carrier based on measured outputs of the S/N measuring means, wherein the adjusting means adjusts phase of the Fourier-transformed multi-carrier data every carrier, and performs gain adjustment based on the gain set by the gain setting means.

14. A multi-carrier communication system according to claim 7, wherein the multi-carrier decoding means includes,
a Fourier transforming means for Fourier-transforming the multi-carrier data received by the receiving means,
a decoding means for decoding the multi-carrier data being Fourier-transformed by the Fourier transforming means every carrier, and
a deciding means for receiving decoded data decoded by the decoding means every carrier, and deciding and outputting the decoded data which are most often received.

15. A multi-carrier communication system according to any one of claims 1, 3, 4, 5, and 6, wherein the transmitting means transmits the multi-carrier data via a power line.

16. A multi-carrier communication system according to any one of claims 2, 3, 7 to 14, wherein the receiving means receives the multi-carrier data via a power line.

17. A multi-carrier communication method comprising the steps of:
encoding input data into multi-carrier data, in which a frequency interval between respective carriers is a reference frequency, by modulating the input data according to a multi-carrier modulation system, then cutting off bandwidths of respective carriers into one over a predetermined multiple, and then inversely Fourier- transforming the multi-carrier data; and
up-sampling the inversely Fourier-transformed multi-carrier data by the predetermined multiple, and then transmitting the multi-carrier data in which an inter-carrier frequency is set to the predetermined multiple of the reference frequency and bandwidths of respective carriers are set equally to bandwidths of respective carriers of the encoded multi-carrier data.

18. A multi-carrier communication method comprising the steps of:
receiving multi-carrier data whose frequency interval between respective carriers is set to a predetermined multiple of a reference frequency, then down-sampling the received multi-carrier data by one over the predetermined multiple, then Fourier-transforming the multi-carrier data in which an inter-carrier frequency is set to the reference frequency and each carrier bandwidth is set to one over the predetermined multiple of the carrier bandwidth of the received multi-carrier data, and then decoding the multi-carrier data.
